# EUROPEAN PATENT APPLICATION

(11) **EP 4 737 967 A1**
(43) Date of publication of application: **06.05.2026**
(21) Application number: 24820533.8
(22) Date of filing: 28.06.2024
(51) Int. Cl.: G02B 6/42

(54) **OPTICAL MODULE**

(30) Priority: 30.06.2023 CN 202310798471; 30.06.2023 CN 202321708276 U; 21.11.2023 CN 202323147129 U; 27.06.2024 CN 202421488349 U; 27.06.2024 CN 202410843098; 27.06.2024 CN 202410843038; 27.06.2024 CN 202410843043; 27.06.2024 CN 202421487408 U; 27.06.2024 CN 202421487537 U
(71) Applicant: Hisense Broadband Multimedia Technologies Co., Ltd, Qingdao, Shandong 266555 (CN)
(72) Inventor: SUN, Wanju, Qingdao, Shandong 266555 (CN); ZHENG, Long, Qingdao, Shandong 266555 (CN); CUI, Feng, Qingdao, Shandong 266555 (CN); XU, Fabu, Qingdao, Shandong 266555 (CN)
(74) Representative: Hoefer & Partner Patentanwälte mbB
(86) International application number: PCT/CN2024/102659
(87) International publication number: WO 2025/002427

(57) **Abstract**

This disclosure provides an optical module (200) which includes:, a circuit board (300), on which a mounting hole (302) is formed; an optical emission component (400) embedded in the mounting hole (302), the optical emission component (400) includes an emission base (410) embedded in the mounting hole (302), a light emitting assembly disposed on the emission base (410) and connected to the circuit board (300) through wire bonding to generate 2N paths of optical signals, wherein N≥1, and a collimating lens group (440) located in output optical path of the light emitting assembly; a first optical reception component (510) disposed on the circuit board (300) to receive N paths of optical signals, the first optical reception component (510) is connected to a surface of the circuit board (300); a second optical reception component (520) disposed on the circuit board (300) to receive N paths of optical signals, the second optical reception component (520) is connected to a surface of the circuit board; a second optical fiber (721) connected to the first optical reception component (510) and passes by a side of the emission base (410), and a third optical fiber (731) connected to the second optical reception component (520) and passes by a side of the emission base (410).

## Description

This disclosure claims priorities to Chinese application No. 2023107984710 filed on June 30, 2023 with the China National Intellectual Property Administration, Chinese application No. 2023217082766 filed on June 30, 2023 with the China National Intellectual Property Administration, Chinese application No. 202323147129.9 filed on November 21, 2023 with the China National Intellectual Property Administration, Chinese application No. 2024108430980 filed on June 27, 2024 with the China National Intellectual Property Administration, Chinese application No. 2024108430389 filed on June 27, 2024 with the China National Intellectual Property Administration; Chinese application No. 202410843043X filed on June 27, 2024 with the China National Intellectual Property Administration, Chinese application No. 2024214874081 filed on June 27, 2024 with the China National Intellectual Property Administration, Chinese application No. 2024214875370 filed on June 27, 2024 with the China National Intellectual Property Administration, and Chinese application No. 202421488349X filed on June 27, 2024 with the China National Intellectual Property Administration, the entire disclosures of which are incorporated herein by reference.

### FIELD OF THE INVENTION

This disclosure relates to the technical field of optical fiber communication technology, particularly to an optical module.

### BACKGROUND OF THE INVENTION

Optical communication technology is used in new services and application modes such as cloud computing, mobile internet, and video. In optical communication technology, the optical module is a device that realizes conversion of optical and electrical signals, and is one of the key devices in optical communication equipment.

With development of the optical communication technology, transmission rate of the optical module has been continuously improved, especially in recent years, optical modules of 800G have been gradually introduced to the market. In order to achieve the transmission rate of 800G of the optical module, it is necessary to integrate 8 optical transmitters and 8 optical receivers in the QSFP-DD or OSFP package. To achieve the required functions in such a small space, it is a great challenge for high-frequency performance, optical performance, heat dissipation characteristics, structural complexity, manufacturability, etc.

### SUMMARY OF THE INVENTION

This disclosure provides an optical module including a circuit board, an optical emission component, a first optical reception component, a second optical reception component and an optical transmission assembly. The circuit board is formed thereon with a mounting hole. The optical emission component includes an emission base, a light emitting assembly and a collimating lens group. The emission base is embedded in the mounting hole. The light emitting assembly is disposed on the emission base and is connected to a surface of the circuit board through wire bonding, for generating 2N paths of optical signals, wherein N≥1. The collimating lens group is disposed on the emission base and is located in an output optical path of the light emitting assembly. The first optical reception component is disposed on the circuit board and is configured to receive N paths of optical signals, and the first optical reception component is connected to a surface of the circuit board. The second optical reception component is disposed on the circuit board and is configured to receive N paths of optical signals, and the first optical reception component is connected to a surface of the circuit board. The optical transmission assembly includes a second optical fiber and a third optical fiber, wherein the second optical fiber is connected to the first optical reception component and passes by a side of the emission base. The third optical fiber is connected to the second optical reception component, and the second optical fiber passes by a side of the emission base.

### BRIEF DESCRIPTION OF THE DRAWINGS

In order to illustrate technical solutions disclosed in this disclosure more clearly, a brief description on the accompanying drawings required in some embodiments of this disclosure will be given below. It is obvious that the accompanying drawings described below are only those of some embodiments of this disclosure, and for those skilled in the art, other accompanying drawings may also be obtained based on these drawings. In addition, the accompanying drawings described below may be regarded as schematic diagrams and are not intend to limit actual size of the relevant products, actual process of the relevant methods, actual timing of signals or the like involved in the disclosed embodiments.
FIG. 1 is a partial structural diagram of an optical communication system provided according to some embodiments of this disclosure;
FIG. 2 is a partial structural diagram of a host computer provided according to some embodiments of this disclosure;
FIG. 3 is a structural diagram of an optical module provided according to some embodiments of this disclosure;
FIG. 4 is an exploded diagram of an optical module provided according to some embodiments of this disclosure;
FIG. 5 is a schematic diagram of the internal structure of an optical module provided according to some embodiments of the present disclosure;
FIG. 6 is a schematic diagram of the internal structure of another optical module provided according to some embodiments of the present disclosure;
FIG. 7 is a first schematic diagram of the internal structure of another optical module provided according to some embodiments of the present disclosure;
FIG. 8 is a second schematic diagram of the internal structure of another optical module provided according to some embodiments of the present disclosure;
FIG. 9 is an exploded schematic diagram of an optical emission component provided according to some embodiments of the present disclosure;
FIG. 10 is a partial schematic diagram of an optical emission component provided according to some embodiments of the present disclosure;
FIG. 11 is a schematic structural diagram of an emission base provided according to some embodiments of the present disclosure;
FIG. 12 is a sectional view of an optical emission component and a circuit board provided according to some embodiments of the present disclosure;
FIG. 13 is an exploded schematic diagram of another optical emission component provided according to some embodiments of the present disclosure;
FIG. 14 is a partial schematic diagram of another optical emission component provided according to some embodiments of the present disclosure;
FIG. 15 is a schematic structural diagram of an emission cover plate provided according to some embodiments of the present disclosure;
FIG. 16 is a diagram showing a use state of an emission cover plate provided according to some embodiments of the present disclosure;
FIG. 17 is a schematic structural diagram of another emission cover plate provided according to some embodiments of the present disclosure;
FIG. 18 is a schematic diagram of another emission cover plate in use according to some embodiments of the present disclosure;
FIG. 19 is a partial schematic diagram of another optical emission component provided according to some embodiments of the present disclosure;
FIG. 20 is a schematic diagram showing an assemble state of another optical emission component and a circuit board according to some embodiments of the present disclosure;
FIG. 21 is a schematic structural diagram of another emission base provided according to some embodiments of the present disclosure;
FIG. 22 is a schematic structural diagram of a third optical fiber-fixing head provided according to some embodiments of the present disclosure;
FIG. 23 is a sectionalview of a third optical fiber-fixing head provided according to some embodiments of the present disclosure;
FIG. 24 is a sectionalview of another optical emission component and a circuit board provided according to some embodiments of the present disclosure;
FIG. 25 is a schematic structural diagram of another emission cover plate provided according to some embodiments of the present disclosure;
FIG. 26 is a diagram showing a use state of another emission cover plate provided according to some embodiments of the present disclosure;
FIG. 27 is a partial schematic diagram of another optical emission component provided according to some embodiments of the present disclosure;
FIG. 28 is a schematic diagram showing an assemble state of another optical emission component and a circuit board provided according to some embodiments of the present disclosure;
FIG. 29 is a schematic structural diagram of another emission base provided according to some embodiments of the present disclosure;
FIG. 30 is a sectional view of another optical emission component and a circuit board provided according to some embodiments of the present disclosure;
FIG. 31 is a schematic structural diagram of another emission cover plate provided according to some embodiments of the present disclosure;
FIG. 32 is a diagram showing a use state of another emission cover plate provided according to some embodiments of the present disclosure;
FIG. 33 is a partially exploded schematic diagram of a first optical reception component provided according to some embodiments of the present disclosure;
FIG. 34 is a schematic diagram showing a partial structure of a first optical reception component provided according to some embodiments of the present disclosure;
FIG. 35 is a schematic structural diagram of a reception case provided according to some embodiments of the present disclosure;
FIG. 36 is a sectional view of an optical reception component and a circuit board provided according to some embodiments of the present disclosure;
FIG. 37 is an exploded schematic diagram of another first optical reception component provided according to some embodiments of the present disclosure;
FIG. 38 is a schematic structural diagram of a reception fixing head provided according to some embodiments of the present disclosure;
FIG. 39 is an exploded schematic diagram of a reception fixing head provided according to some embodiments of the present disclosure;
FIG. 40 is a sectional view of a reception fixing head provided according to some embodiments of the present disclosure;
FIG. 41 is a schematic structural diagram of another reception fixing head provided according to some embodiments of the present disclosure;
FIG. 42 is a first partial schematic diagram of a circuit board provided according to some embodiments of the present disclosure;
FIG. 43 is a second partial schematic diagram of a circuit board provided according to some embodiments of the present disclosure;
FIG. 44 is a partial schematic diagram showing an interior structure of an optical module provided according to some embodiments of the present disclosure;
FIG. 45 is a first schematic structural diagram of a fixing frame provided according to some embodiments of the present disclosure;
FIG. 46 is a second schematic structural diagram of a fixing frame provided according to some embodiments of the present disclosure;
FIG. 47 is a schematic structural diagram of a gasket provided according to some embodiments of the present disclosure;
FIG. 48 is a diagram showing a use state of an optical fiber-fixing frame according to some embodiments of the present disclosure;
FIG. 49 is a schematic structural diagram of another optical fiber-fixing frame provided according to some embodiments of the present disclosure;
FIG. 50 is a schematic diagram showing an assemble state of another optical fiber-fixing frame and a gasket provided according to some embodiments of the present disclosure ;
FIG. 51 is a partial schematic diagram of a lower shell part provided according to some embodiments of the present disclosure;
FIG. 52 is a first diagram showing a use state of a lower shell part provided according to some embodiments of the present disclosure;
FIG. 53 is a second diagram showing a use state of a lower shell part provided according to some embodiments of the present disclosure;
FIG. 54 is a schematic structural diagram of another optical fiber-fixing frame provided according to some embodiments of the present disclosure;
FIG. 55 is a schematic assembly diagram of another optical fiber-fixing frame provided according to some embodiments of the present disclosure;
FIG. 56 is a first schematic structural diagram of another optical fiber-fixing component provided according to some embodiments of the present disclosure;
FIG. 57 is a second schematic structural diagram of another optical fiber-fixing component provided according to some embodiments of the present disclosure;
FIG. 58 is a first sectional view of another optical fiber-fixing component provided according to some embodiments of the present disclosure;
FIG. 59 is a second sectional view of another optical fiber-fixing component provided according to some embodiments of the present disclosure;
FIG. 60 is a partial schematic diagram of another optical fiber-fixing component provided according to some embodiments of the present disclosure;
FIG. 61 is a partial schematic diagram of another lower shell part provided according to some embodiments of the present disclosure;
FIG. 62 is an exploded schematic diagram of a partial structure of an optical module provided according to some embodiments of the present disclosure;
FIG. 63 is a sectional view of an optical module provided according to some embodiments of the present disclosure;
FIG. 64 is a partial enlarged view of the portion in FIG. 63 indicated by the letter "A";
FIG. 65 is a schematic diagram of a partial structure of another optical module provided according to some embodiments of the present disclosure;
FIG. 66 is a second schematic diagram of a partial structure of another optical module provided according to some embodiments of the present disclosure;
FIG. 67 is an exploded schematic diagram of a seven optical fiber adapter provided according to some embodiments of the present disclosure;
FIG. 68 is a schematic structural diagram of a fixing member provided according to some embodiments of the present disclosure;
FIG. 69 is a schematic structural diagram of a pin provided according to some embodiments of the present disclosure;
FIG. 70 is an exploded schematic diagram of an upper shell part and a lower shell part provided according to some embodiments of the present disclosure;
FIG. 71 is a partial sectional view of an optical module provided according to some embodiments of the present disclosure;
FIG. 72 is a partial schematic diagram of another optical module provided according to some embodiments of the present disclosure;
FIG. 73 is a schematic structural diagram of a wire-restraining member provided according to some embodiments of the present disclosure;
FIG. 74 is a schematic diagram showing an assemble state of a wire-restraining member and a circuit board according to some embodiments of the present disclosure;
FIG. 75 is a schematic structural diagram of an upper shell part provided according to some embodiments of the present disclosure;
FIG. 76 is an exploded schematic diagram of an upper shell part provided according to some embodiments of the present disclosure; and
FIG. 77 is an exploded schematic diagram of another upper shell part provided according to some embodiments of the present disclosure.

### DETAILED DESCRIPTION OF THE EMBODIMENTS

Technical solutions of some embodiments of this disclosure will be described clearly and completely with reference to the accompanying drawings below. Apparently, these embodiments are merely some, but not all, of the embodiments of this disclosure. All other embodiments obtained by person of ordinary skill in the art based on the embodiments of this disclosure shall fall within the protection scope of this disclosure.

In the optical communication technology, it is generally necessary to load information onto light and use the propagation of light to achieve information transmission, so as establish information transmission between information processing devices. In this regard, the light loaded with information is namely an optical signal. The optical signal is propagated in the information transmission devices, which may reduce loss of optical power and achieve high-speed, long-distance, and low-cost information transmission. The information that may be processed by the information processing device is an electrical signal. The information processing device generally includes an optical network unit (ONU), a gateway, a router, a switch, a mobile phone, a computer, a server, a tablet, a television and the like, and the information transmission device typically includes an optical fiber, a waveguide and the like.

Conversion of optical and electrical signals between the information processing device and the information transmission device may be achieved through optical modules. For example, an optical fiber may be connected to an optical signal input and/or output terminal of an optical module, and an optical network terminal may be connected to an electrical signal input and/or output terminal of the optical module; a first optical signal from the optical fiber is transmitted to the optical module, which converts the first optical signal into a first electrical signal, and then transmits the first electrical signal to the optical network terminal; a second electrical signal from the optical network terminal is transmitted into the optical module, which converts the second electrical signal into a second optical signal, and then transmits the second optical signal to the optical fiber. Since information transmission between multiple information processing devices may be made via an electrical signal, at least one of the information processing devices needs to be directly connected to the optical module, and it is unnecessary for all of the information processing devices to be directly connected to the optical module. The information processing device directly connected to the optical module is called as a host computer of the optical module. In addition, the optical signal input end or the optical signal output end of the optical module may be called as an optical port, and the electrical signal input end or the electrical signal output end of the optical module may be called as an electrical port.

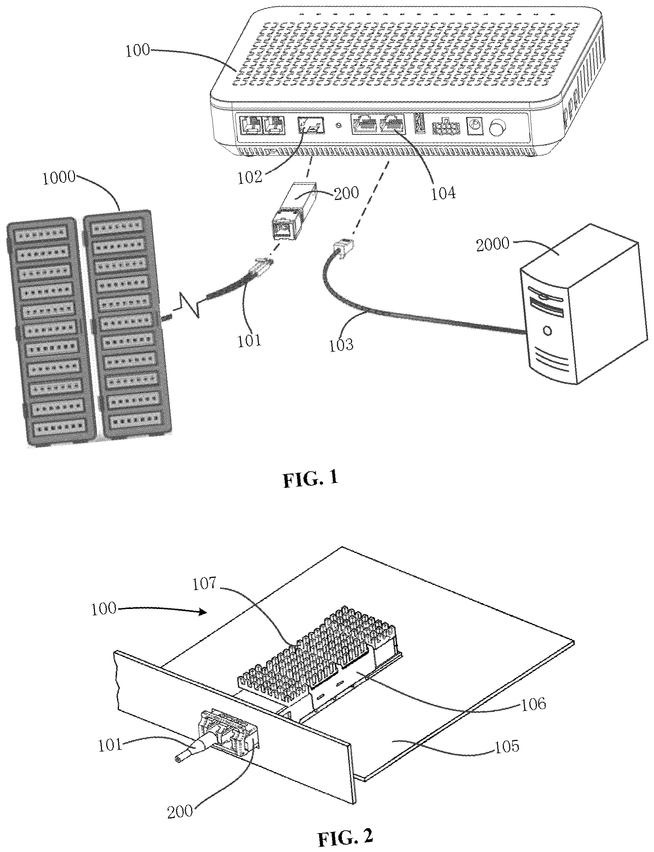

FIG. 1 is a partial structural diagram of an optical communication system provided according to some embodiments of the present disclosure. As shown in FIG. 1, the optical communication system mainly includes a remote information processing device 1000, a local information processing device 2000, a host computer 100, an optical module 200, an optical fiber 101, and a network cable 103.

One end of the optical fiber 101 extends towards the remote information processing device 1000, while the other end thereof is coupled to an optical interface of the optical module 200. An optical signal may undergo a total reflection in the optical fiber 101, and propagation of the optical signal in a total reflection direction can almost maintain the original optical power. The optical signal undergoes multiple total reflections in the optical fiber 101, such that the optical signal from the remote information processing device 1000 is transmitted into the optical module 200, or the optical signal from the optical module 200 is transmitted to the remote information processing device 1000, thereby achieving long-distance information transmission with low power loss.

The optical communication system may include one or more optical fiber 101. The optical fiber 101 may be detachably connected or fixedly connected to the optical module 200. The host computer 100 is configured to provide data signals to the optical module 200, receive data signals from the optical module 200, or monitor or control the working state of the optical module 200.

The host computer 100 includes a substantially rectangular housing and an optical module interface 102 disposed on the housing. The optical module interface 102 is configured to connect to the optical module 200 such that a unidirectional or bidirectional electrical signal connection is established between the host computer 100 and the optical module 200.

The host computer 100 includes an external electrical interface which may be coupled to the electrical signal network. For example, the external electrical interface includes a Universal Serial Bus (USB) interface or a network cable interface 104, and the network cable interface 104 is configured to be coupled by the network cable 103, thereby establishing a unidirectional/bidirectional electrical signal connection between the host computer 100 and the network cable 103. One end of the network cable 103 is connected to the local information processing device 2000, and the other end thereof is connected to the host computer 100, so as to establish an electrical signal connection between the local information processing device 2000 and the host computer 100 through the network cable 103. For example, a third electrical signal emitted by the local information processing device 2000 is transmitted to the host computer 100 through the network cable 103; the host computer 100 generates a second electrical signal based on the third electrical signal; the second electrical signal from the host computer 100 is transmitted to the optical module 200; the optical module 200 converts the second electrical signal into a second optical signal, and transmits the second optical signal to the optical fiber 101, and the second optical signal is transmitted to the remote information processing device 1000 through the optical fiber 101. For example, a first optical signal from the remote information processing device 1000 is propagated through the optical fiber 101; the first optical signal from the optical fiber 101 is transmitted into the optical module 200; the optical module 200 converts the first optical signal into a first electrical signal, and transmits the first electrical signal to the host computer 100; the host computer generates a fourth electrical signal based on the first electrical signal, and transmits the fourth electrical signal to the local information processing device 2000. It is noted that the optical module is a tool for achieving the conversion between optical and electrical signals, and during the conversion between optical and electrical signals as described above, the information is not changed, but methods for encoding and decoding the information may be changed.

The host computer 100 includes not only an optical network unit but also an optical line terminal (OLT), an optical network terminal (ONT), or a data center server or the like.

FIG. 2 is a partial structural diagram of a host computer according to some embodiments of this disclosure. In order to illustrate a connection relationship between the optical module 200 and the host computer 100 clearly, FIG. 2 only shows the structure of the host computer 100 related to the optical module 200. As shown in FIG. 2, the host computer 100 further includes a PCB circuit board 105 disposed within the housing, a cage 106 disposed on a surface of the PCB circuit board 105, a radiator 107 disposed on the cage 106, and an electrical connector disposed inside the cage 106. The electrical connector is configured to access the electrical port of the optical module 200. The radiator 107 has a raised structure that increases a heat dissipation area.

The optical module 200 is inserted into the cage 106 of the host computer 100 and then is secured by the cage 106. Thus, heat generated by the optical module 200 is conducted to the cage 106, and then dissipated via the radiator 107. After the optical module 200 is inserted into the cage 106, an electrical interface of the optical module 200 is connected to the electrical connector inside the cage 106 such that a bidirectional electrical signal connection is established between the optical module 200 and the host computer 100. In addition, the optical port of the optical module 200 is connected to the optical fiber 101, such that the optical module 200 establishes a bidirectional optical signal connection with the optical fiber 101.

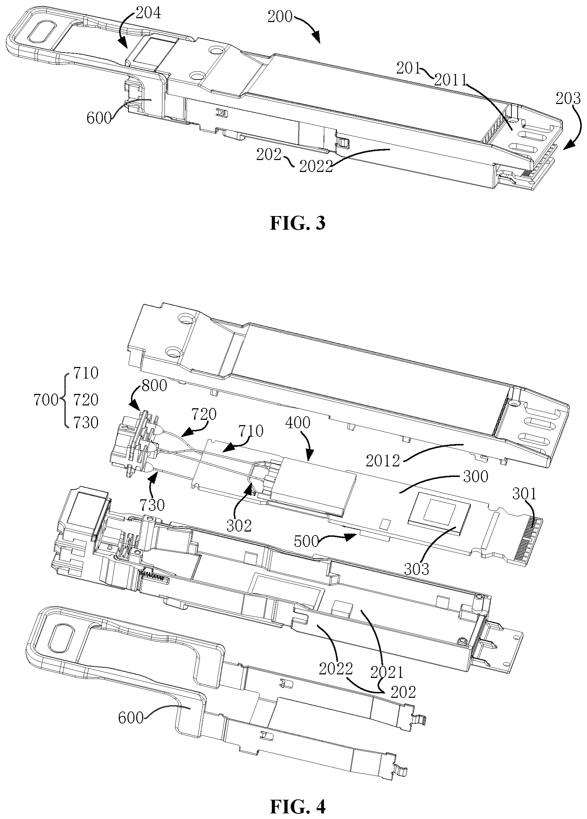

FIG. 3 is a structural diagram of an optical module according to some embodiments of this disclosure, and FIG. 4 is an exploded diagram of an optical module according to some embodiments of this disclosure. As shown in FIG. 3 and FIG. 4, the optical module 200 includes a shell, and a circuit board 300, an optical emission component 400 and an optical reception component 500 that are disposed within the shell. However, this disclosure is not limited to this. In some embodiments, the optical module 200 may include one of the optical emission component 400 and the optical reception component 500.

The shell may include an upper shell part 201 and a lower shell part 202. The upper shell part 201 is covered on the lower shell part 202 to form the aforementioned shell having two openings 204 and 205. An outer contour of the shell is generally in a cuboid shape.

In some embodiments, the lower shell part 202 includes a bottom plate 2021 and two lower side plates 2022 located at opposite sides of the bottom plate 2021 and disposed perpendicular to the bottom plate 2021, and the upper shell part 201 includes a upper cover plate 2011 which is covered on the two lower side plates 2022 of the low shell part 202 so as to form the above-mentioned shell.

In some embodiments, the lower shell part 202 includes a bottom plate 2021 and two lower side plates 2022 located on opposite sides of the bottom plate 2021 and disposed perpendicular to the bottom plate 2021; the upper shell part 201 includes a upper cover plate 2011 and two upper side plates 2012 located on opposite sides of the upper cover plate 2011 and disposed perpendicular to the upper cover plate 2011, and the two upper side plates 2012 are combined with the two lower side plates 2022 such that the upper shell part 201 is covered on the lower shell part 202.

A direction along a connecting line between the two openings 203 and 204 may be consistent with a length direction of the optical module 200 or inconsistent with the length direction of the optical module 200. For example, the opening 203 is located at an end of the optical module 200 (left end in FIG. 3), and the opening 204 is also located at an end of the optical module 200 (right end in FIG. 3). Alternatively, the opening 203 is located at an end of the optical module 200, while the opening 204 is located at a side of the optical module 200. The opening 203 is an electrical port, and one end of the circuit board 300 extends out of the electrical port and is inserted into the electrical connector of the host computer. The opening 204 is an optical port configured to be coupled by the optical fiber 101 such that the optical fiber 101 is connected with the optical emission component 400 and the optical reception component 500 of the optical module 200.

The assembling way in which the upper shell part 201 is combined with the lower shell part 202 facilitates mounting the circuit board 300, the optical emission component 400, the optical reception component 500 or the like into the above-mentioned shell, such that these components is encapsulated and protected by the upper shell part 201 and the lower shell part 202. In addition, when assembling the circuit board 300, the optical emission component 400, the optical reception component 500 or the like, it is easier to deploy positioning elements, heat dissipation elements, and electromagnetic shielding elements of these components, which facilitates automate production implementation.

In some embodiments, the upper shell part 201 and the lower shell part 202 are made of metal material(s), which facilitates to achieving electromagnetic shielding and heat dissipation.

In some embodiments, the optical module 200 further includes an unlocking component 600 located outside the shell thereof. The unlocking component 600 is configured to achieve a fixed connection between the optical module 200 and the host computer or to release the fixed connection between the optical module 200 and the host computer.

For example, the unlocking component 600 is located outside the two lower side plates 2022 of the lower shell part 202, and includes a snapping part that matches with the cage 106 of the host computer. When the optical module 200 is inserted into the cage 106, the snapping part of the unlocking component 600 secures the optical module 200 within the cage 106. As the unlocking component 600 is pulled, the snapping part of the unlocking component 600 moves accordingly, and thus the connection relationship between the snapping part and the host computer is changed, thereby releasing the snapping connection between the optical module 200 and the host computer, such that the optical module 200 can be drawn out of the cage 106.

The circuit board 300 includes circuit wiring, electronic elements, chips, and so on. The electronic elements and chips are connected together via the circuit wiring according to a circuit design so as to achieve various functions such as power supply, electrical signal transmission, and grounding. For example, the electronic element may include a capacitor, a resistor, a transistor, and a Metal-Oxide-Semiconductor Field-Effect Transistor (MOSFET). For example, the chip may include a microcontroller unit (MCU), a laser driver chip, a transimpedance amplifier (TIA), a limiting amplifier (LA), a Clock and Data Recovery (CDR) chip, a power management chip, and a digital signal processing (DSP) chip.

The circuit board 300 is generally a rigid circuit board. Also, the rigid circuit board may achieve a carrying function due to its relatively hard material. For example, the rigid circuit board may steadily carry the above-mentioned electronic elements and chips thereon. Furthermore, the rigid circuit board may be easily inserted into the electrical connector inside the cage 106 of the host computer 100.

The circuit board 300 further includes a gold finger 301 formed on a surface of an end thereof, which is composed of multiple independent pins. The circuit board 300 is inserted into the cage 106 and is conductively connected to the electrical connector inside the cage 106 via the golden finger 301. The golden finger 301 may be disposed only on the surface one side of the circuit board 300 (e.g., an upper surface shown in FIG. 4), or on surfaces of upper and lower sides of the circuit board 300 to provide a larger number of pins, so as to adapt to occasions where a large number of pins are required. The golden finger 301 is configured to establish an electrical connection with the host computer to achieve power supply, grounding, Inter-Integrated Circuit (I2C) signal transmission, data signal transmission or the like. Of course, it is possible to use a flexible circuit board in some optical modules. The flexible circuit board is generally used in cooperation with the rigid circuit board to serve as a supplement to the rigid circuit board.

The optical emission component 400 is configured to receive an electrical signal transmitted from the circuit board 300, such that the optical emission component 400 generates an optical signal; the optical reception component 500 is configured to receive an optical signal input from an outside of the optical module and convert it into an electrical signal. At least one of the optical emission component 400 and the optical reception component 500 are located at a side of the circuit board 300 away from the golden finger.

In some embodiments, the optical emission component 400 and the optical reception component 500 each are physically separated from the circuit board 300, and then electrically connected to the circuit board 300 via a respective flexible circuit board or electrical connector.

In some embodiments, at least one of the optical emission component 400 and the optical reception component 500 may be directly disposed on the circuit board 300. For example, at least one of the optical emission component 400 and the optical reception component 500 may be disposed on a surface of the circuit board 300 or a side of the circuit board 300.

In some embodiments, the optical module 200 further includes an optical transmission assembly 700, which is disposed in the shell. The optical transmission assembly 700 is configured to connect to the external optical fiber 101 (hereinafter referred to as the external optical fiber) to establish an optical connection between the optical emission component 400, the optical reception component 500 and the external optical fiber, such that the optical signal generated by the optical emission component 400 can be coupled to the external optical fiber, and the optical signal input by the external optical fiber can be coupled to the optical reception component.

In some embodiments, the optical transmission assembly 700 includes an optical fiber adapter and an optical fiber, which optical fiber can also be referred to as an internal optical fiber relative to an external optical fiber. One end of the optical fiber is connected to the optical fiber adapter, and the other end of the optical fiber is connected to the optical emission component 400 or the optical reception component 500. Exemplarily, the optical transmission assembly 700 includes one or more optical fiber adapters, and the optical fiber includes multiple optical fibers. The optical emission component 400 may be connected to one or more optical fiber adapters via one or more optical fibers, and the optical reception component 500 may be connected to one or more optical fiber adapters via multiple optical fibers. The structural form of the optical fiber adapter is not limited in the embodiments of the present disclosure, for example, the optical fiber adapter may be of an LC plug form or an MT plug form.

In some embodiments, to facilitate the assembly and fixation of the optical fiber adapter in the optical module 200, the optical module 200 further includes an optical fiber-fixing component 800. The optical fiber-fixing component 800 is disposed in the optical port and fixedly connected to the optical fiber adapter to fix the optical fiber adapter at the optical port.

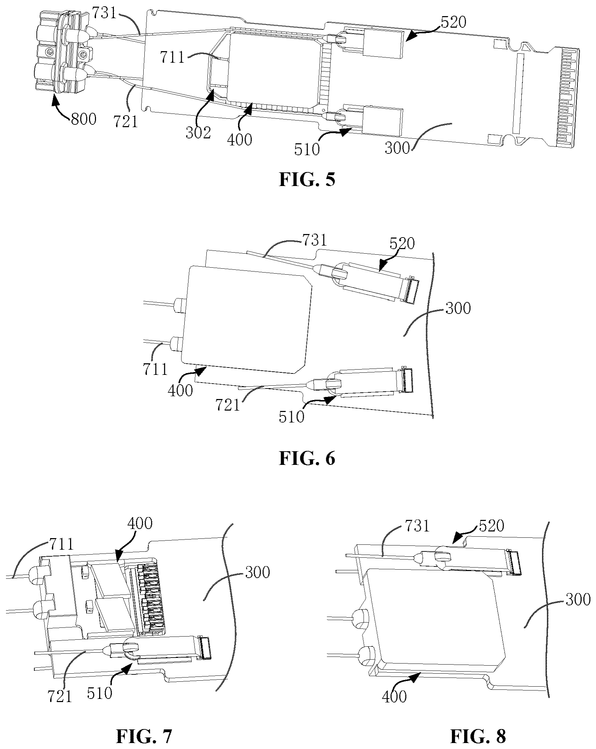

FIG. 5 is a schematic diagram of an internal structure of an optical module provided according to some embodiments of the present disclosure. As shown in FIG. 4 and FIG. 5, in some embodiments, the circuit board 300 is provided thereon with a mounting hole 302, and the optical emission component 400 is assembled and connected to the mounting hole 302. For example, the optical emission component 400 is embedded in the mounting hole 302. In some embodiments, the mounting hole 302 is a through hole in such a way that a top of the optical emission component 400 is located above the mounting hole 302, while a bottom of the optical emission component 400 is located below the mounting hole 302.

In some embodiments, the central axis of the mounting hole 302 is close to the central axis of the circuit board 300, that is, the mounting hole 302 is located close to the center of the circuit board 300 in the width direction.

In some embodiments, a DSP chip 303 is disposed on the front surface of the circuit board 300, and the DSP chip 303 is configured to transmit a high-frequency signal to the optical emission component 400. The optical emission component 400 receives the high-frequency signal transmitted by the DSP chip 303 to generate an optical signal, two opposite surfaces on the circuit board 300 are the main bearing surfaces of the circuit board 300, one of which is called the front surface of the circuit board 300, facing the upper cover plate 2011, the other surface is the back surface of the circuit board 300, facing the bottom plate 2021, and the front surface of the circuit board 300 and the back surface of the circuit board 300 are opposite surfaces.

In some embodiments, the optical reception component 500 includes a first optical reception component 510 and a second optical reception component 520, which are disposed on the back surface of the circuit board 300 and are respectively configured to receive optical signals input from the outside.

In some embodiments, the DSP chip 303 may be disposed on the back surface of the circuit board 300; and the first optical reception component 510 and the second optical reception component 520 may be disposed on the front surface of the circuit board 300.

In some embodiments, the first optical reception component 510 is disposed at an end of the optical emission component 400 close to the gold finger 301, that is, the first optical reception component 510 is closer to the electrical port of the optical module than the optical emission component 400. The first optical reception component 510 is disposed at an edge of a side of the circuit board 300.

In some embodiments, the second optical reception component 520 is disposed at an end of the optical emission component 400 close to the gold finger 301, that is, the second optical reception component 520 is closer to the electrical port of the optical module than the optical emission component 400. The second optical reception component 520 is disposed at an edge of a side of the circuit board 300.

In some embodiments, the first optical reception component 510 is located at one side of one end of the optical emission component 400, and the second optical reception component 520 is located at the other side of one end of the optical emission component 400. For example, the first optical reception component 510 is located at an edge of one side of the circuit board 300, and the second optical reception component 520 is located at an edge of the other side of the circuit board 300.

In some embodiments, the first optical reception component 510 is connected to the optical emission component 400. For example, the bottom of the optical emission component 400 supports and connects to the first optical reception component 510. With the optical emission component 400 supporting the first optical reception component 510, it can not only reduce a space occupied by the first optical reception component 510 on the circuit board 300, but also facilitate to arrange the DSP chip 303 as close as possible to the optical emission component 400 and the first optical reception component 510, such that high-frequency signal transmission distance between the DSP chip 303 and the optical emission component 400 and the first optical reception component 510 is as short as possible. For example, the bottom of the optical emission component 400 supports some devices of the first optical reception component 510.

In some embodiments, the second optical reception component 520 is connected to the optical emission component 400. For example, the bottom of the optical emission component 400 supports and connects to the second optical reception component 520. With the optical emission component 400 supporting the second optical reception component 520, it can not only reduce the space occupied by the second optical reception component 520 on the circuit board 300, but also make the DSP chip 303 as close to the optical emission component 400 and the second optical reception component 520 as possible, such that high-frequency signal transmission distance between the DSP chip 303 and the emitting component 400 and the second optical reception component 520 is as short as possible. For example, the bottom of the optical emission component 400 supports some devices of the second optical reception component 520.

In some embodiments, both the first optical reception component 510 and the second optical reception component 520 are disposed along the length direction of the circuit board 300.

In some embodiments, the optical transmission assembly 700 includes a first transmission group 710, one end of the first transmission group 710 is connected to the optical fiber-fixing component 800, and the other end of the first transmission group 710 is connected to the optical emission component 400. For example, the first transmission group 710 includes a first optical fiber 711, and an end of the first optical fiber 711 is connected to the optical emission component 400. The first optical fiber 711 may include one optical fiber or two optical fibers, etc. In some embodiments, when the number of optical fibers of the first optical fiber 711 is greater than or equal to 4, the first optical fiber 711 may be called a first optical fiber ribbon.

In some embodiments, the optical transmission assembly 700 includes a second transmission group 720, one end of the second transmission group 720 is connected to the optical fiber-fixing component 800, and the other end of the second transmission group 720 is connected to the first optical reception component 510. For example, the second transmission group 720 includes a second optical fiber 721, and an end of the second optical fiber 721 is connected to the first optical reception component 510. The second optical fiber 721 may include one optical fiber or multiple optical fibers. In some embodiments, when the number of optical fibers of the second optical fiber 721 is greater than or equal to 4, the second optical fiber 721 may be called a second optical fiber ribbon.

In some embodiments, the optical transmission assembly 700 includes a third transmission group 730, one end of the third transmission group 730 is connected to the optical fiber-fixing component 800, and the other end of the third transmission group 730 is connected to the second optical reception component 520. As an example, the third transmission group 730 includes a third optical fiber 731, and an end of the third optical fiber 731 is connected to the second optical reception component 520. The third optical fiber 731 may include one optical fiber or multiple optical fibers. In some embodiments, when the number of optical fibers of the third optical fiber 731 is greater than or equal to 4, the third optical fiber 731 may be called a third optical fiber ribbon.

FIG. 6 is a schematic diagram of an internal structure of another optical module provided according to some embodiments of the present disclosure. In some embodiments, as shown in FIG. 6, the first optical reception component 510 is tiltly arranged such that the first optical reception component 510 is not arranged along the length direction of the circuit board 300. For example, one end of the first optical reception component 510 for inputting light is closer to a side of the circuit board 300 than the other end of the first optical reception component 510. The angle at which the of the first optical reception component 510 is tilted is 8-10°.

In some embodiments, the second optical reception component 520 is tiltly arranged such that the second optical reception component 520 is not disposed along the length direction of the circuit board 300. As an example, one end of the second optical reception component 520 for inputting light is closer to a side of the circuit board 300 than the other end of the second optical reception component 520. The angle at which the second optical reception component 520 is tilted 8-10°.

The first optical reception component 510 or the second optical reception component 520 is tiltedly arranged on the circuit board 300, which can reduce spaces of the first optical reception component 510 and the second optical reception component 520 on the circuit board in the length direction of the circuit board 300, and is convenient for controlling distances between the DSP chip 303 and the optical emission component 400, the first optical reception component 510 and the second optical reception component 520, such that distances for transmitting high-frequency signals between the DSP chip 303 and the optical emission component 400, the first optical reception component 510 and the second optical reception component 520 are relatively short.

In some embodiments, the mounting hole 302 is disposed at an end of the circuit board 300, and one end of the mounting hole 302 is open.

FIG. 7 is a first schematic diagram of an internal structure of another optical module provided according to some embodiments of the present disclosure, and FIG. 8 is a second schematic diagram of an internal structure of another optical module provided according to some embodiments of the present disclosure. In some embodiments, as shown in FIG. 7 and FIG. 8, the first optical reception component 510 is disposed on the front surface of the circuit board 300. For example, the first optical reception component 510 and the optical emission component 400 are disposed along the width direction of the circuit board 300, and the first optical reception component 510 is located at one side of the optical emission component 400. Of course, in the embodiment of the present disclosure, the first optical reception component 510 is not limited to being disposed at the side of the optical emission component 400, but may also be disposed at one end of the optical emission component 400.

In some embodiments, the second optical reception component 520 is disposed on the back surface of the circuit board 300, and the second optical reception component 520 is located at a side of the bottom of the optical emission component 400. As an example, the second optical reception component 520 is disposed within the projection area of the first optical reception component 510 on the back surface of the circuit board 300. For example, the second optical reception component 520 is disposed symmetrical with the first optical reception component 510.

In some embodiments, the optical emission component 400 is configured to generate 2N paths of optical signals, the first optical reception component 510 is configured to receive N paths of optical signals, and the second optical reception component 520 is configured to receive N paths of optical signals. Wherein, N is equal to or greater than 1, for example, N=4. When N=4, the optical emission component 400 is configured to generate eight paths of optical signals, the first optical reception component 510 is configured to receive four paths of optical signals, and the second optical reception component 520 is configured to receive four paths of optical signals. Therefore, in the optical module provided according to the embodiment of the present disclosure, the optical emission component 400 is centrally arranged, and the optical reception components 500 are separately arranged, so as to facilitate to use the internal space of the optical module.

In some embodiments, the 2N paths of optical signals generated by the optical emission component 400 are coupled to an external optical fiber through two optical fibers. After the optical emission component 400 generates 2N paths of optical signals, N paths of the optical signals are combined into one light beam, and the other N paths of optical signals are combined into one light beam, and the two combined light beams are then transmitted through the two optical fibers.

In some embodiments, the 2N paths of optical signals generated by the optical emission component 400 are coupled to external optical fibers through 2N optical fibers. After the optical emission component 400 generates the 2N paths of optical signals, the 2N paths of optical signals are transmitted through the 2N optical fibers.

In some embodiments, four paths of optical signals are transmitted through one optical fiber (the four paths of optical signals are combined into one beam) to the first optical reception component 510, and the first optical reception component 510 firstly demultiplexes the light into four paths of lights, and then receives and converts them into electrical signals, respectively.

In some embodiments, four paths of optical signals are transmitted through one optical fiber (the four paths of optical signals are combined into one beam) to the second optical reception component 520, and the second optical reception component 520 firstly demultiplexes the light into four paths of lights, and then receives and converts them into electrical signals, respectively.

In some embodiments, four paths of optical signals are transmitted to the first optical reception component 510 via four optical fibers, and the first optical reception component 510 receives the four paths of lights; four paths of optical signals are transmitted to the second optical reception component 520 via four optical fibers, and the second optical reception component 520 receives the four paths of lights.

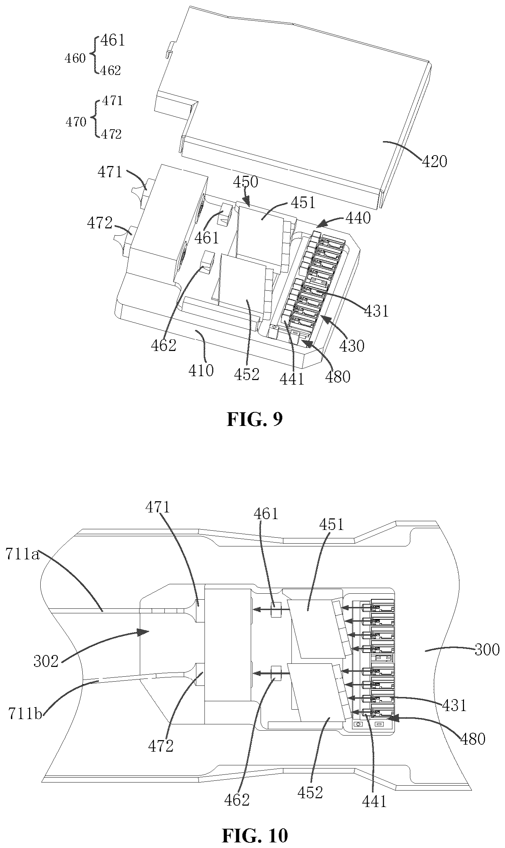

FIG. 9 is an exploded schematic diagram of an optical emission component provided according to some embodiments of the present disclosure, and FIG. 10 is a partial schematic diagram of an optical emission component provided according to some embodiments of the present disclosure. In some embodiments, as shown in FIG. 9 and FIG. 10, the optical emission component 400 includes an emission base 410 and an emission cover plate 420, the emission base 410 is connected to the mounting hole 302, the bottom of the emission base 410 faces the bottom plate 2021, and the emission cover plate 420 covers the emission base 410 to form an emission cavity.

In some embodiments, the optical emission component 400 includes a light emitting assembly 430, which is disposed on the emission base 410 and is configured to generate a light signal. The light emitting assembly 430 may be connected to the front surface of the circuit board 300 via wire bonding, that is, front surface of the light emitting assembly 430 may face the upper cover 2011.

In some embodiments, the light emitting assembly 430 may include multiple lasers 431, such that the light emitting assembly 430 can generate multiple optical signals. For example, the light emitting assembly 430 includes 2N lasers 431, as an example, the light emitting assembly 430 includes four lasers 431 or eight lasers 431, etc.

In some embodiments, the optical emission component 400 includes a collimating lens group 440, which is disposed on the emission base 410 and located in an output optical path of the light emitting assembly 430. The collimating lens group 440 is configured to collimate the light signal generated by the light emitting assembly 430.

In some embodiments, the collimating lens group 440 may include a plurality of collimating lenses 441, which are correspondingly arranged in the output optical path of the laser 431, and are configured to collimate the optical signal generated by the corresponding laser 431. Exemplarily, the collimating lens group 440 includes four collimating lenses 441 or eight collimating lenses 441, etc.

In some embodiments, the optical emission component 400 may include a combiner group 450, which is disposed on the emission base 410 and is disposed along the output optical path of the light emitting assembly 430. Exemplarily, a collimating lens group 440 is disposed in an optical path between the combiner group 450 and the light emitting assembly 430, and the combiner group 450 is configured to combine multiple paths of collimated lights.

In some embodiments, the combiner group 450 includes a plurality of combiners, and each combiner correspondingly combines an optical signal output by multiple lasers 431. For example, the right side of the combiner includes four light inputs for inputting signal lights of multiple wavelengths, and each light input is configured to input a signal light of one wavelength; the left side of the combiner includes a light output for outputting light. Taking a case in which signal lights of four wavelengths of λ1, λ2, λ3 and λ4 are inputted to the combiner as an example, a signal light having a wavelength of λ1 enters the combiner through a first light input, and is reflected six times at six different positions in the combiner to the light output; the a signal light having a wavelength of λ2 enters the combiner through a second light input, and is reflected four times at four different positions in the combiner to the light output; a signal light having a wavelength of λ3 enters the combiner through a third light input, and is reflected twice at two different positions in the combiner to the light output; and a signal light having a wavelength of λ4 enters the combiner through a fourth light input, and is directly transmitted to the light output. In this way, with the combiner, signal lights of different wavelengths can be input via different light inputs and output through the same light output, thereby realizing light combining of signal lights of different wavelengths.

In some embodiments, the combiner group 450 includes a first combiner 451 and a second combiner 452 arranged side by side on the emission base 410. The first combiner 451 correspondingly combines optical signals output by four lasers 431, and the second combiner 452 correspondingly combines optical signals output by four lasers 431.

In some embodiments, the optical emission component 400 may include a converging lens group 460, which is disposed on the emission base 410 and is located in the output optical path of the combiner group 450. For example, the converging lens group 460 includes a plurality of converging lenses.

In some embodiments, the converging lens group 460 includes a first converging lens 461 and a second converging lens 462. The first converging lens 461 is located in the output optical path of the first combiner 451, and the second converging lens 462 is located in the output optical path of the second combiner 452.

In some embodiments, the optical emission component 400 may include an optical fiber-fixing assembly 470, which is provided to connect the optical transmission assembly 700 to facilitate coupling of the optical signals generated by the optical emission component 400 to the optical transmission assembly 700. The optical fiber-fixing assembly 470 includes an optical fiber-fixing head, which connects the optical transmission assembly 700 and the emission base 410 to connect the optical transmission assembly 700 to the optical emission component 400. As an example, the optical fiber-fixing head is connected to an end of optical fiber in the optical transmission assembly 700 so as to protect the end of the optical fiber and to facilitate fixedly connecting the end of the optical fiber, such that the optical signal output by the optical emission component 400 is coupled to the optical transmission assembly 700.

In some embodiments, the optical fiber-fixing head of the optical fiber-fixing assembly 470 may fix end(s) of one or more optical fibers. For example, the optical fiber-fixing head of the optical fiber-fixing assembly 470 may fix ends of two, four, or eight optical fibers.

In some embodiments, the optical fiber-fixing assembly 470 includes a first optical fiber-fixing head 471 and a second optical fiber-fixing head 472, wherein the first optical fiber-fixing head 471 is connected to the other end of the first transmission group 710, and the second optical fiber-fixing head 472 is connected to the other end of the first transmission group 710. Exemplarily, the first optical fiber-fixing head 471 is connected to the first optical fiber 711a, and the second optical fiber-fixing head 472 is connected to the first optical fiber 711b.

In some embodiments, the light input end of the first optical fiber-fixing head 471 is optically connected to the first combiner 451, and the light input end of the second optical fiber-fixing head 472 is optically connected to the second combiner 452. For instance, the first converging lens 461 is arranged between the light input end of the first optical fiber-fixing head 471 and the light output of the first combiner 451, and the second converging lens 462 is disposed between the light input end of the second optical fiber-fixing head 472 and the light output of the second combiner 452.

In some embodiments, the optical emission component 400 may include a thermoelectric cooler (TEC) assembly 480. The TEC assembly 480 is disposed on the emission base 410, and the top of the TEC assembly 480 supports the light emitting assembly 430. The TEC assembly 480 is configured to adjust the temperature around the light emitting assembly 430.

In some embodiments, the collimating lens group 440 may be disposed on the top of the TEC assembly 480. For example, the collimating lens group 440 further includes a support plate 442 disposed on the top of the TEC assembly 480, and the support plate 442 fixedly supports the collimating lens 441.

In some embodiments, the TEC assembly 480 includes a TEC 481 and a substrate 482 disposed on the top of TEC 481 and fixedly supports the light emitting assembly 430. The substrate 482 is configured to facilitate connection between the light emitting assembly 430 and the TEC 481 and to adjust a height of the top of the light emitting assembly 430.

In some embodiments, the TEC assembly 480 includes a TEC 481, and the top of the TEC 481 fixedly supports the light emitting assembly 430.

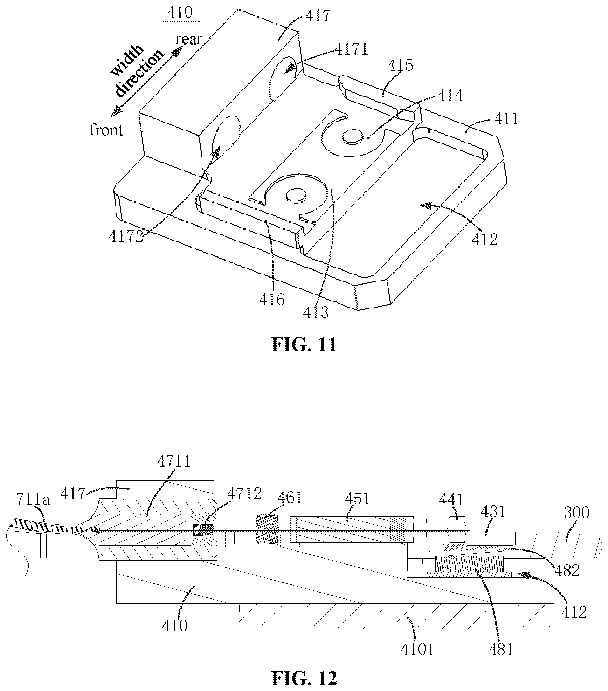

FIG. 11 is a schematic structural diagram of an emission base provided according to some embodiments of the present disclosure, and FIG. 12 is a sectional view of an optical emission component and a circuit board provided according to some embodiments of the present disclosure. As shown in FIG. 11 and FIG. 12, the emission base 410 includes a first mounting surface 411, and the first mounting surface 411 extends from the left side to the right side of the emission base 410. When the emission base 410 is embedded in the mounting hole 302, the first mounting surface 411 is bonded to the back surface of the circuit board 300, and the sides of the emission base 410 may be bonded to the back surface of the circuit board 300 by solid glue to achieve a fixed connection between the emission base 410 and the circuit board 300.

One end of the first mounting surface 411 is provided with a mounting groove 412, and the mounting surface of the mounting groove 412 is recessed relative to the first mounting surface 411. The light emitting assembly 430 is located in the mounting groove 412, such that a relative height between the top of the light emitting assembly 430 and the front surface of the circuit board 300 can be adjusted through the mounting groove 412. For example, the top of the light emitting assembly 430 is made to be flush with the front surface of the circuit board 300 through the mounting groove 412.

In some embodiments, the TEC assembly 480 is located in the mounting groove 412. For instance, the bottom of the TEC 481 is connected to the mounting surface of the mounting groove 412 so as to adjust the relative height between the top of the TEC 481 and the front surface of the circuit board 300 through the mounting groove 412.

In some embodiments, the emission base 410 includes a second mounting surface 413, which protrudes relative to the first mounting surface 411 and is located between the mounting groove 412 and the left side of the emission base 410. The combiner group 450 is disposed on the second mounting surface 413.

In some embodiments, a glue-guiding groove 414 is formed on the second mounting surface 413, and the glue-guiding groove 414 is recessed relative to the second mounting surface 413. The combiner is placed on the second mounting surface 413, and then glue is injected into the glue-guiding groove 414 to achieve bonding and fixing of the combiner and the emission base 410 through the glue.

In some embodiments, two glue-guiding grooves 414 are formed on the second mounting surface 413, one of the glue-guiding grooves 414 is under the first combiner 451, and the other of the glue-guiding grooves 414 is under the second combiner 452.

In some embodiments, a first baffle plate 415 and a second baffle plate 416 are formed on the first mounting surface 411 of the emission base 410, and the first baffle plate 415 and the second baffle plate 416 extend from the first mounting surface 411 towards the upper shell part 201. For example, the first baffle plate 415 and the second baffle plate 416 are parallel to the two lower side plates 2022 of the lower shell part 202, respectively, and the second mounting surface 413 is located between the first baffle plate 415 and the second baffle plate 416.

In some embodiments, a distance between the first baffle plate 415 and the second baffle plate 4165 in the width direction of the emission base 410 is smaller than the width of the emission base 410; there is a distance between the first baffle plate 415 and one side surface of the emission base 410 facing one lower side plate 2022, and there is a distance between the second baffle plate 416 and one side surface of the emission base 410 facing the other lower side plate 2022.

When the emission base 410 is embedded in the mounting hole 302, the first mounting surface 411 abuts against the back surface of the circuit board 300, the first baffle plate 415 and the second baffle plate 416 are located in the mounting hole 302, the first baffle plate 415 abuts against the rear side surface of the mounting hole 302, and the second baffle plate 416 abuts against the front side surface of the mounting hole 302, so as to limit the emission base 410 through the first baffle plate 415 and the second baffle plate 416.

In some embodiments, two glue-guiding grooves 414 are formed on the second mounting surface 413. One glue-guiding groove 414 is formed with an opening on one side thereof facing the first baffle plate 415 (the rear side of the first baffle plate 415), with a gap formed between the glue-guiding groove 414 and the first baffle plate 415, through which glue can be injected into the glue-guiding groove 414, and the amount of glue in the glue-guiding groove 414 can be balanced through the gap. The other glue-guiding groove 414 is formed with an opening on one side thereof facing the second baffle plate 416 (the front side of the second baffle plate 416), and there is a gap between the glue-guiding groove 414 and the second baffle plate 416, through which glue can be injected into the glue-guiding groove 414, and the amount of glue in the glue-guiding groove 414 can be balanced through the gap.

In some embodiments, the rear side of the first combiner 451 abuts against the first baffle plate 415 to limit the combiner through the first baffle plate 415; the front side of the second combiner 452 abuts against the second baffle plate 416 to limit the combiner through the second baffle plate 416.

In some embodiments, in order to improve the heat dissipation efficiency, a heat conductor 4101 is arranged on the bottom surface (facing the bottom plate 2021 of the lower shell part 202) of the emission base 410, and the emission base 410 is in contact with the bottom plate 2021 through the heat conductor 4101. The emission base 410 conducts heat to the heat conductor 4101, and the heat is conducted to the lower shell part 202 via the heat conductor 4101, so as to improve the heat dissipation efficiency of the emission base 410 through the heat conductor 4101.

In some embodiments, a mounting platform 417 is formed at one end (the left end in the figure) of the first mounting surface 411, and the mounting platform 417 extends from the first mounting surface 411 towards the upper shell part 201. A width of the mounting platform 417 in the width direction of the emission base 410 is smaller than the width of the emission base 410, and the width of the mounting platform 417 is smaller than the distance between the first baffle plate 415 and the second baffle plate 416. A distance between the rear side surface of the mounting platform 417 and the rear side surface of the mounting hole 302 is the first width, and a distance between the front side surface of the mounting platform 417 and the front side surface of the mounting hole 302 is the second width. The first width and the second width may be the same.

In some embodiments, due to the coupling connection between the optical combiner and the fiber coupler, the first width and the second width may be different. For example, when the light outlet of the optical combiner is close to the first baffle plate 415, the first width is smaller than the second width.

In some embodiments, the mounting platform 417 is formed with a first through hole 4171 and a second through hole 4172 which penetrate through the mounting platform 417 in the left-right direction. The first optical fiber-fixing head 471 is inserted into the first through hole 4171, and the second optical fiber-fixing head 472 is inserted into the second through hole 4172. Of course, in some embodiments, the top of the mounting platform 417 can directly support and connect the first optical fiber-fixing head 471 and the second optical fiber-fixing head 472.

Due to difference of transmission media, composite light is easily reflected at a fiber end face in fiber coupler. Most of the composite light is injectted into the fiber, and a small portion of the composite light is reflected at the fiber end face. The reflected composite light may return to the laser along the original path, affecting the light-emitting performance of the laser.

In order to prevent the reflected light from returning to the laser along the original path, an optical fiber ferrule 4711 and an isolator 4712 are provided in the first optical fiber-fixing head 471. The optical fiber ferrule 4711 is configured to fix an end of the first optical fiber 711a, and the isolator 4712 is located at one end of the first optical fiber-fixing head 471 facing the first converging lens 461. The optical signal output by the first combiner 451 is converged into the first optical fiber-fixing head 471 through the first converging lens 461, passes through the isolator 4712 and is coupled to the first optical fiber 711a. When the optical signal is reflected at an end face of the first optical fiber 711a, the reflected optical signal will be isolated by the isolator 4712 and cannot pass through the isolator 4712. In this way, the reflected light cannot return to the laser, thereby ensuring the light emitting performance of the laser.

In some embodiments, reference may be made to the structure of the first optical fiber-fixing head 471 with regard to the structure of the second optical fiber-fixing head 472.

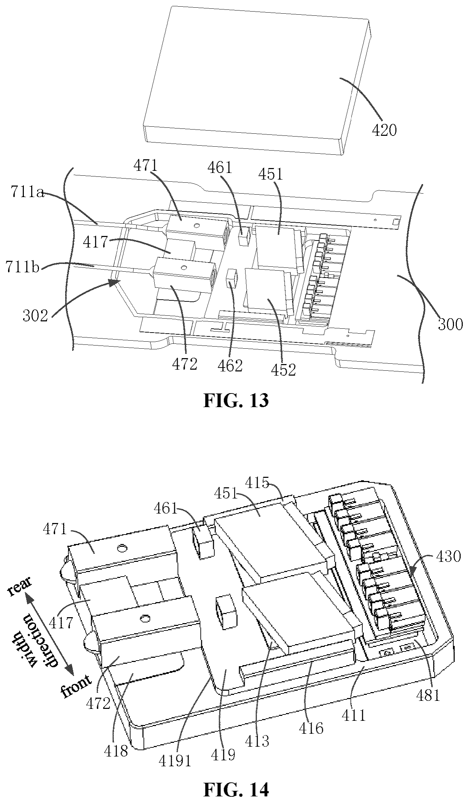

FIG. 13 is an exploded schematic diagram of another optical emission component provided according to some embodiments of the present disclosure, and FIG. 14 is a partial schematic diagram of another optical emission component provided according to some embodiments of the present disclosure. As shown in FIG. 13 and FIG. 14, the emission base 410 may include a third mounting surface 418, and the third mounting surface 418 is located at one end of the emission base 410 close to the optical port; the third mounting surface 418 supports and connects the first optical fiber-fixing head 471 and the second optical fiber-fixing head 472.

In some embodiments, the mounting platform 417 may be disposed on the third mounting surface 418, and is located between the output optical path of the first combiner 451 and the output optical path of the second combiner 452. The rear side surface of the mounting platform 417 limits and connects to a side surface of the first optical fiber-fixing head 471, and the front side surface of the mounting platform 417 limits and connects to the second optical fiber-fixing head 472. This can facilitate the assembly of the first optical fiber-fixing head 471 and the second optical fiber-fixing head 472, and can also facilitate the disassembly of the first optical fiber-fixing head 471 and the second optical fiber-fixing head 472, thereby reducing disassembly damage.

In some embodiments, the emission base 410 may include a fourth mounting surface 419, which is located at a side of the second mounting surface 413 close to the third mounting surface 418, and a gap is formed between the fourth mounting surface 419 and the third mounting surface 418. The light input ends of the first optical fiber-fixing head 471 and the second optical fiber-fixing head 472 extend above the gap, and the gap is convenient for reducing assembly interference of the first optical fiber-fixing head 471 and the second optical fiber-fixing head 472, and ensuring assembly accuracy of the first optical fiber-fixing head 471 and the second optical fiber-fixing head 472.

In some embodiments, the fourth mounting surface 419 is higher than the third mounting surface 418, and a step surface 4191 is formed at the side of the fourth mounting surface 419 close to the third mounting surface 418, and the step surface 4191 is located at an edge of the gap between the fourth mounting surface 419 and the third mounting surface 418. The bottom of the light input end of the first optical fiber-fixing head 471 and the bottom of the light input end of the second optical fiber-fixing head 472 abut on the step surface 4191. The step surface 4191 is configured for assembling and limiting the first optical fiber-fixing head 471 and the second optical fiber-fixing head 472.

In some embodiments, outer contours of the first optical fiber-fixing head 471 and the second optical fiber-fixing head 472 are square, that is, there are multiple planes on the first optical fiber-fixing head 471 and the second optical fiber-fixing head 472, through which the emission base 410 is assembled and connected.

In some embodiments, the light emitting assembly 430 includes 8 lasers 431, the collimating lens group 440 includes 8 collimating lenses 441, the combiner group 450 includes a first combiner 451 and a second combiner 452, the converging lens group 460 includes a first converging lens 461 and a second converging lens 462, and the first optical fiber 711 includes a first optical fiber 711a and a first optical fiber 711b. The 8 lasers 431 generate 8 paths of optical signals, which are converted into 8 paths of collimated lights through the 8 collimating lenses 441. Among them, 4 paths of collimated lights are transmitted to the first combiner 451, combined into one beam through the first combiner 451 and transmitted to the first converging lens 461, and then converged and transmitted to the first optical fiber 711a through the first converging lens 461, such that one optical fiber can transmit four paths of optical signals. The other four paths of collimated lights are transmitted to the second combiner 452, combined into one beam by the second combiner 452 and transmitted to the second converging lens 462, converged by the second converging lens 462 and transmitted to the first optical fiber 711b, such that one optical fiber can transmit four paths of optical signals.

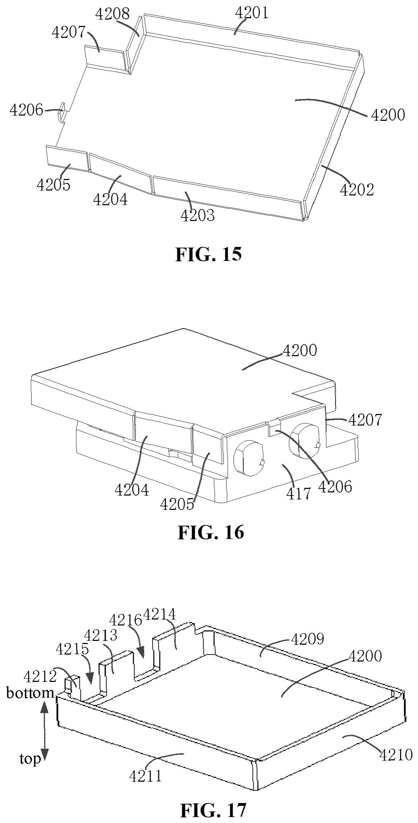

FIG. 15 is a schematic structural diagram of an emission cover plate provided according to some embodiments of the present disclosure, and FIG. 16 is a diagram illustrating a use state of an emission cover plate provided according to some embodiments of the present disclosure. In some embodiments, as shown in FIG. 15 and FIG. 16, the emission cover plate 420 includes a top plate 4200, a first side plate 4201, a second side plate 4202, a third side plate 4203, a fourth side plate 4204, a fifth side plate 4205, a sixth side plate 4207 and a seventh side plate 4208. The first side plate 4201, the second side plate 4202, the third side plate 4203, the fourth side plate 4204, the fifth side plate 4205, the sixth side plate 4207 and the seventh side plate 4208 are respectively fixedly connected to the inner side of the top plate 4200. In some embodiments, the outer side of the top plate 4200 contacts the upper cover 2011, and the bottoms of the first side plate 4201, the second side plate 4202 and the third side plate 4203 are respectively connected to the front surface of the circuit board 300.

The second side plate 4202 is located on the right side of the emission cover plate 420, and an opening is formed on the left side of the emission cover plate 420. The first side plate 4201 is opposite to the third side plate 4203, and the fifth side plate 4205 is opposite to the sixth side plate 4207. The first side plate 4201 and the sixth side plate 4207 are located at the same side, the third side plate 4203 and the fifth side plate 4205 are located at the same side, and the fifth side plate 4205 and the sixth side plate 4207 are located at the left side of the emission cover plate 420. Opposite ends of the second side plate 4202 are respectively connected to the first side plate 4201 and the third side plate 4203, and the distance between the first side plate 4201 and the third side plate 4203 is greater than the distance between the fifth side plate 4205 and the sixth side plate 4207.

In some embodiments, when the first width between the mounting platform 417 and the mounting hole 302 is smaller than the second width, the first side plate 4201 is connected to the sixth side plate 4207 through the seventh side plate 4208, and the seventh side plate 4208 is parallel to the second side plate 4202, such that the first side plate 4201 protrudes relative to the sixth side plate 4207; the third side plate 4203 is connected to the fifth side plate 4205 through the fourth side plate 4204, and the fourth side plate 4204 is arranged inclined such that the third side plate 4203 protrudes relative to the fifth side plate 4205.

In some embodiments, when the emission cover plate 420 is covered on the emission base 410, the inner side surface of the top plate 4200 contacts the top surface of the mounting platform 417; and the first side plate 4201, the second side plate 4202, the third side plate 4203, the fourth side plate 4204, the fifth side plate 4205, the sixth side plate 4207 and the seventh side plate 4208 are connected to the front surface of the circuit board 300 to fix and support the emission cover plate 420 through the circuit board 300.

In some embodiments, the fifth side plate 4205 and the sixth side plate 4207 are respectively connected to the front side surface and the rear side surface of the mounting platform 417 so as to limit the emission cover plate 420 in the front-rear direction through the fifth side plate 4205 and the sixth side plate 4207.

In some embodiments, a snap fitting member 4206 is formed on the left side of the top plate 4200, and the snap fitting member 4206 extends from the top plate 4200 towards the circuit board 300. The snap fitting member 4206 is located between the fifth side plate 4205 and the sixth side plate 4207. When the emission cover plate 420 is covered on the emission base 410, the snap fitting member 4206 is engaged with the left side surface of the mounting platform 417 to limit the emission cover plate 420 in the left-right direction through the snap fitting member 4206.

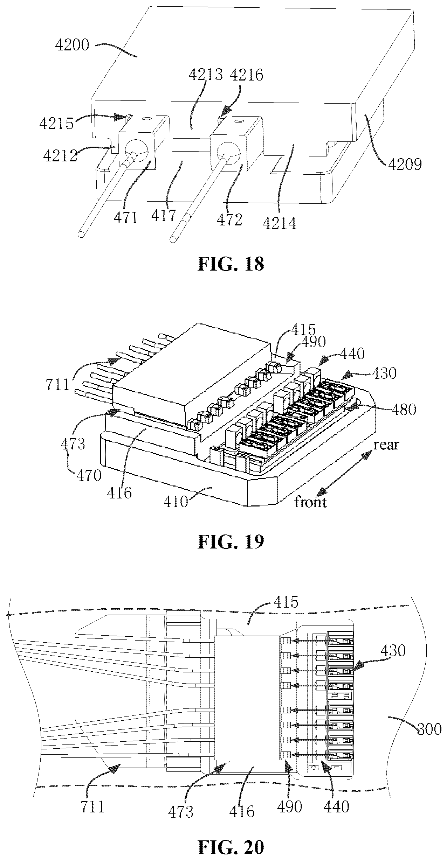

FIG. 17 is a schematic structural diagram of another emission cover plate provided according to some embodiments of the present disclosure, and FIG. 18 is a schematic diagram of another emission cover plate in use according to some embodiments of the present disclosure. In some embodiments, as shown in FIG. 17 and FIG. 18, the emission cover plate 420 includes a top plate 4200, an eighth side plate 4209, a ninth side plate 4210, a tenth side plate 4211, an eleventh side plate 4212, a twelfth side plate 4213, and a thirteenth side plate 4214. The tops of the eighth side plate 4209, the ninth side plate 4210, the tenth side plate 4211, the eleventh side plate 4212, the twelfth side plate 4213, and the thirteenth side plate 4214 are respectively fixedly connected to the inner side of the top plate 4200. A first interval 4215 is formed between the eleventh side plate 4212 and the twelfth side plate 4213, and a second interval 4216 is formed between the twelfth side plate 4213 and the thirteenth side plate 4214.

In some embodiments, heights of the eleventh side plate 4212, the twelfth side plate 4213 and the thirteenth side plate 4214 are greater than the height of the eighth side plate 4209; and heights of the ninth side plate 4210 and the tenth side plate 4211 are equal to the height of the eighth side plate 4209. For example, bottoms of the eleventh side plate 4212, the twelfth side plate 4213, and the thirteenth side plate 4214 are flush, and bottoms of the eighth side plate 4209, the ninth side plate 4210, and the tenth side plate 4211 are flush.

In some embodiments, when the emission cover plate 420 is covered on the emission base 410, the first optical fiber-fixing head 471 is assembled and connected in the first spacer 4215, the second optical fiber-fixing head 472 is assembled and connected in the second spacer 4216, and a side of the mounting platform 417 is limited and connected with the twelfth side plate 4213. The emission base 410 can be assembled and limited with the emission cover plate 420 through the mounting platform 417, so as to avoid the emission cover plate 420 from touching devices in the emission cavity when assembling the emission cover plate 420. The front surface of the circuit board 300 supports and connects with bottoms of the eighth side plate 4209, the ninth side plate 4210 and the tenth side plate 4211.

FIG. 19 is a partial schematic diagram of another optical emission component provided according to some embodiments of the present disclosure, and FIG. 20 is a schematic assembly diagram of another optical emission component and a circuit board provided according to some embodiments of the present disclosure. In some embodiments, as shown in FIG. 19 and FIG. 20, the optical fiber-fixing assembly 470 includes a third optical fiber-fixing head 473. The third optical fiber-fixing head 473 is disposed on the emission base 410, and the third optical fiber-fixing head 473 fixedly connects the optical transmission assembly 700. The third optical fiber-fixing head 473 is located along the output optical path of the light emitting assembly 430, and is configured to fix an end of the optical transmission assembly 700 in the output optical path of the light emitting assembly 430, so as to facilitate coupling the optical signal generated by the light emitting assembly 430 to the first transmission group 710.

In some embodiments, a bottom of the third optical fiber-fixing head 473 is fixedly connected to the emission base 410, and a middle of the third optical fiber-fixing head 473 is connected to an end of the first optical fiber 711, and the first optical fiber 711 transverses through the third optical fiber-fixing head 473. For example, the first optical fiber 711 includes multiple optical fibers, and multiple optical signals generated by the light emitting assembly 430 are coupled to the corresponding first optical fiber 711, such that the first transmission group 710 can transmit multiple optical signals. For example, the first optical fiber 711 includes four optical fibers or eight optical fibers.

In some embodiments, the optical emission component 400 may include an isolator group 490 disposed on a light incident side of the third optical fiber-fixing head 473. The isolator group 490 is configured to isolate an optical signal reflected back by an optical fiber end face in the first optical fiber 711. For instance, the isolator group 490 includes a plurality of isolators 491, which are located at a side of the third optical fiber-fixing head 473. The emission base supports and connects the isolators 491, and the isolators 491 are correspondingly disposed in a direction of a light incident axis of the first optical fiber 711.

In some embodiments, the isolator group 490 is disposed in the transmission optical path from the collimating lens group 440 to the third optical fiber-fixing head 473. The optical signal collimated by the collimating lens group 440 passes through the isolator group 490 and then is coupled to the first optical fiber 711. Exemplarily, an optical axis of the collimating lens 441 is coaxial with an optical axis of the first optical fiber 711, and the isolator 491 is located in the optical axis of the corresponding collimating lens 441.

In some embodiments, the isolator 491 is fixedly connected to a right side surface of the third optical fiber-fixing head 473, and the right side surface of the third optical fiber-fixing head 473 is the side surface of the third optical fiber-fixing head 473 facing the light emitting assembly 430.

In some embodiments, the light emitting assembly 430 generates multiple light signals, which are transmitted to the collimating lenses 441 of the collimating lens group 440 and are transmitted to the isolator group 490 after being collimated by the corresponding collimating lenses 441, and then coupled to the optical fiber of the optical transmission assembly 700 after passing through the isolator group 490.

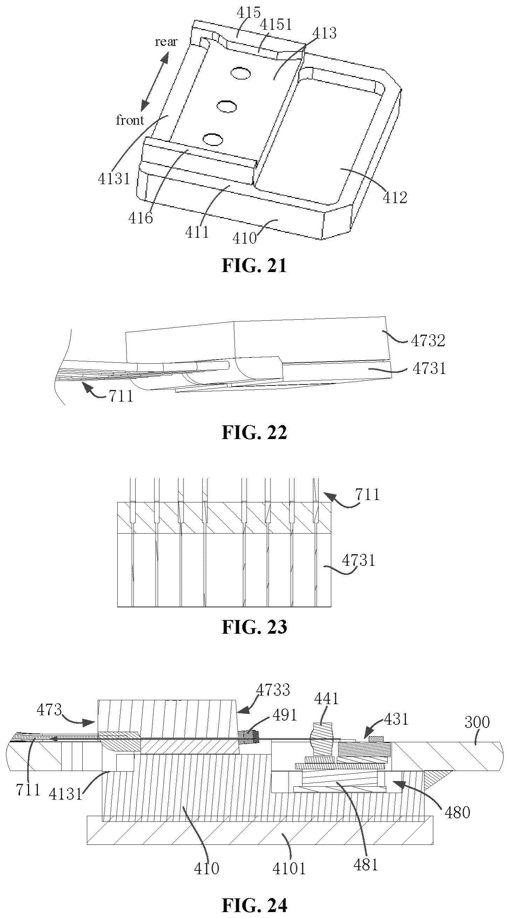

FIG. 21 is a schematic structural diagram of another emission base provided according to some embodiments of the present disclosure. As shown in FIG. 21, an avoidance groove 4131 is provided on the left side of the second mounting surface 413. A side of the avoidance groove 4131 extends to the left end surface of the emission base 410, the front end of the avoidance groove 4131 extends to the first baffle plate 415, and the rear end of the avoidance groove 4131 extends to the second baffle plate 416. The second mounting surface 413 supports and connects the third optical fiber-fixing head 473, and the avoidance groove 4131 avoids or makes way for the third optical fiber-fixing head 473 to facilitate the assembly and connection of the third optical fiber-fixing head 473 and the emission base 410.

In some embodiments, a pillar array is disposed at the right edge of the second mounting surface 413, and the pillar array is arranged from a front side to a rear side of the second mounting surface 413. The pillar array includes a plurality of pillars, and there is an interval between adjacent pillars. The isolators 491 of the isolator group 490 are correspondingly disposed in the corresponding intervals, and side walls of the pillars can support and connect the isolators 491.

In some embodiments, a front side surface of the first baffle plate 415 includes an assembling-positioning surface 4151, which is formed by the front side surface of the first baffle plate 415 protruding towards the second baffle plate 416, and an extension length of the assembling-positioning surface 4151 is less than that of a rear side surface of the first baffle plate 415. For example, the assembling-positioning surface 4151 is located in the middle portion of the front side surface of the first baffle plate 415 to form a convex structure on the front side surface of the first baffle. In this way, the assembling-positioning surface 4151 can not only assemble and position the third optical fiber-fixing head 473, but also reduce obstruction of assembly of the third optical fiber-fixing head 473. When the third optical fiber-fixing head 473 is fixed on the emission base 410, the rear side surface of the third optical fiber-fixing head 473 abuts against the assembling-positioning surface 4151.

In some embodiments, a rear side surface of the second baffle plate 416 may include an assembling-positioning surface, through which the third optical fiber-fixing head 473 is assembled and positioned.

FIG. 22 is a schematic structural diagram of a third optical fiber-fixing head provided according to some embodiments of the present disclosure, and FIG. 23 is a sectional view of a third optical fiber-fixing head provided according to some embodiments of the present disclosure. In some embodiments, as shown in FIG. 22 and FIG. 23, the third optical fiber-fixing head 473 includes an optical fiber-supporting plate 4731 and an optical fiber cover plate 4732 which covers and connects the optical fiber-supporting plate 4731, such that the optical fiber cover plate 4732 and the optical fiber-supporting plate 4731 fix and connect an end of the first optical fiber 711. Exemplarily, the optical fiber-supporting plate 4731 supports and connects the end of the first optical fiber 711, and the end of the first optical fiber 711 extends from one end of the optical fiber-supporting plate 4731 to the other end of the optical fiber-supporting plate 4731. When the optical fiber cover plate 4732 covers and connects the optical fiber-supporting plate 4731, the light input end of the end face of the first optical fiber 711 is unblocked, such that the optical signal generated by the light emitting assembly 430 can be transmitted to the end face of the first optical fiber 711, and then coupled to the first optical fiber 711 through the end face of the first optical fiber 711.

In some embodiments, as shown in the direction of FIG. 22, the left end of the optical fiber-supporting plate 4731 is flush with the left end of the optical fiber cover plate 4732. Of course, in the embodiments of the present disclosure, the left end of the optical fiber cover plate 4732 may extend beyond the left end of the optical fiber-supporting plate 4731, that is, the length of the left end of the optical fiber cover plate 4732 is greater than the length of the left end of the optical fiber-supporting plate 4731. When the left end of the optical fiber cover plate 4732 exceeds the left end of the optical fiber-supporting plate 4731, the optical fiber cover plate 4732 effectively reduces overbending of the first optical fiber 711 towards the top of the third optical fiber-fixing head 473, which helps to protect the first optical fiber 711.

In some embodiments, the first optical fiber 711 includes multiple optical fibers, such as 2 optical fibers, 4 optical fibers, 8 optical fibers, etc.

In some embodiments, the optical fiber-supporting plate 4731 is an integral structure, and the optical fiber cover plate 4732 is an integral structure. Of course, in some embodiments, the optical fiber-supporting plate 4731 may include multiple supporting plates, and the optical fiber cover plate 4732 may include multiple cover plates, so as to form a third optical fiber-fixing head 473 including multiple substructures. Each sub-structure fixes several optical fibers, such as each sub-structure fixes 2 or 4 optical fibers. This makes it convenient to couple and fix the third optical fiber-fixing head 473, so as to ensure the coupling efficiency of the optical signal to the first optical fiber 711.

FIG. 24 is a sectional view of another optical emission component and a circuit board provided according to some embodiments of the present disclosure. As shown in FIG. 24, in some embodiments, the right end of the third optical fiber-fixing head 473 is formed with an inclined surface 4733 which is not perpendicular to the top surface of the third optical fiber-fixing head 473. The inclination angle of the inclined surface 4733 may be 2-7°. The isolator 491 is fixedly connected to the inclined surface 4733, such that the isolator 491 is tiltedly arranged in the optical path from the collimating lens 441 to the first optical fiber 711, which helps to ensure the isolation effect of the isolator 491.

In some embodiments, the light emitting assembly 430 includes eight lasers 431, the collimating lens group 440 includes eight collimating lenses 441, the isolator group 490 includes eight isolators, and the first optical fiber 711 includes eight optical fibers. The eight lasers 431 generate eight paths of optical signals, which are converted into eight paths of collimated lights through the eight collimating lenses 441. The eight paths of collimated lights directly pass through the eight isolators 491 and then are transmitted into the eight optical fibers. In this way, one optical fiber transmits one paths of optical signal.

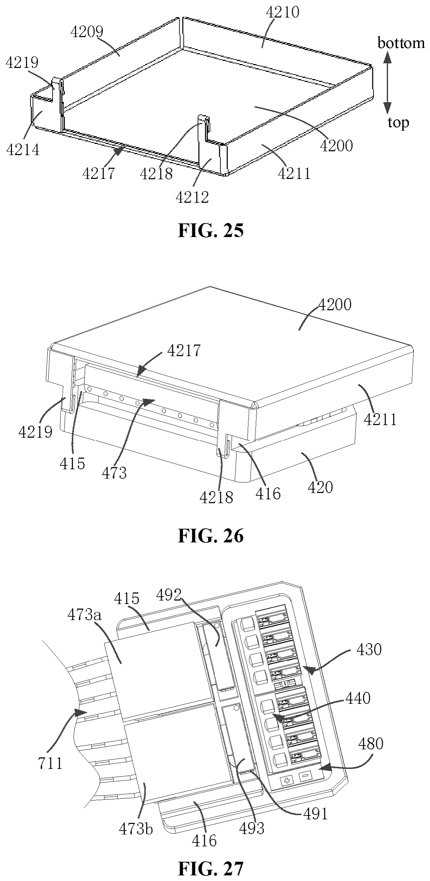

FIG. 25 is a schematic structural diagram of another emission cover plate provided according to some embodiments of the present disclosure, and FIG. 26 is a diagram showing a use state of another emission cover plate provided according to some embodiments of the present disclosure. In some embodiments, as shown in FIG. 25 and FIG. 26, the emission cover plate 420 includes a top plate 4200, an eighth side plate 4209, a ninth side plate 4210, a tenth side plate 4211, an eleventh side plate 4212, and a thirteenth side plate 4214. The tops of the eighth side plate 4209, the ninth side plate 4210, the tenth side plate 4211, the eleventh side plate 4212, and the thirteenth side plate 4214 are respectively fixedly connected to the inner side of the top plate 4200. A notch 4217 is formed between the eleventh side plate 4212 and the thirteenth side plate 4214. In some embodiments, the notch 4217 extends to the top plate 4200.

In some embodiments, bottoms of the eighth side plate 4209, the ninth side plate 4210, the tenth side plate 4211, the eleventh side plate 4212, and the thirteenth side plate 4214 are flush.

In some embodiments, a first snap fitting member 4218 is disposed on the bottom of the eleventh side plate 4212, and the first snap fitting member 4218 is located at an edge of the notch 4217. The first snap fitting member 4218 is configured to assemble and connect the emission cover plate 420 to the emission base 410.

In some embodiments, a second snap fitting member 4219 is disposed on the bottom of the thirteenth side plate 4214, and the second snap fitting member 4219 is located at an edge of the notch 4217. The second snap fitting member 4219 is configured to assemble and connect the emission cover plate 420 with the emission base 410.

In some embodiments, when the emission cover plate 420 is covered on the emission base 410, the first optical fiber 711 passes through the notch 4217, the first snap fitting member 4218 abuts against the left side of the first baffle plate 415, and the second snap fitting member 4219 abuts against the left side of the second baffle plate 416. The first snap fitting member 4218 and the second snap fitting member 4219 are provided for the limitation and connection between the emission cover plate 420 and the emission base 410.

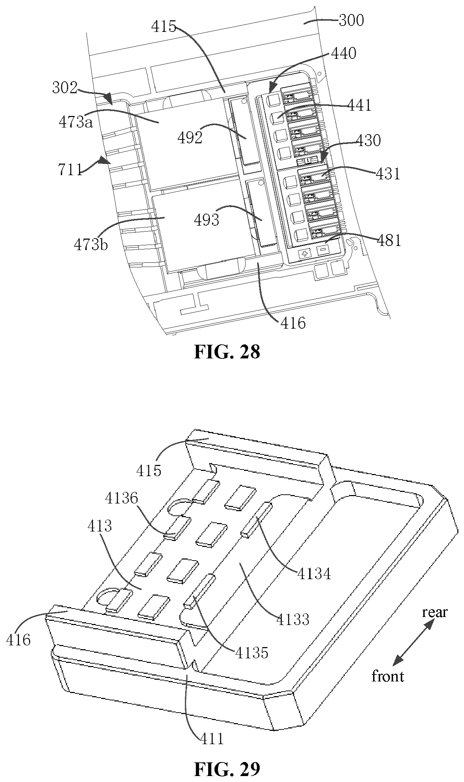

FIG. 27 is a partial schematic diagram of another optical emission component provided according to some embodiments of the present disclosure, and FIG. 28 is a schematic diagram showing an assembly of another optical emission component and a circuit board provided according to some embodiments of the present disclosure. In some embodiments, as shown in FIG. 27 and FIG. 28, the optical fiber-fixing assembly 470 includes third optical fiber-fixing heads 473a and 473b, and the third optical fiber-fixing heads 473a and 473b are arranged side by side on the emission base 410; the third optical fiber-fixing heads 473a and 473b are respectively configured to fixedly connect the optical transmission assembly 700. The third optical fiber-fixing heads 473a and 473b are respectively located in the output optical path of the light emitting assembly 430, and are configured to fix the end of the optical transmission assembly 700 in the output optical path of the light emitting assembly 430, so as to facilitate coupling the optical signal generated by the light emitting assembly 430 to the first transmission group 710.

In some embodiments, the third optical fiber-fixing head 473a fixedly connects four optical fibers of the first optical fiber 711, and the third optical fiber-fixing head 473b fixedly connects the other four optical fibers of the first optical fiber 711. The light emitting assembly 430 includes eight lasers 431, wherein optical signals generated by four lasers 431 are coupled to the optical fibers fixed by the third optical fiber-fixing head 473a, and optical signals generated by the other four lasers 431 are coupled to the optical fibers fixed by the third optical fiber-fixing head 473b.

In some embodiments, the isolator group 490 may include a first isolator bracket 492 and a second isolator bracket 493. The first isolator bracket 492 is disposed at a light input end of the third optical fiber-fixing head 473a, and the second isolator bracket 493 is disposed at a light input end of the third optical fiber-fixing head 473b. A plurality of isolators 491 are disposed on the first isolator bracket 492, and the first isolator bracket 492 fixes and supports these isolators 491. A plurality of isolators 491 are disposed on the second isolator bracket 493, and the second isolator bracket 493 fixes and supports these isolators 491.

In some embodiments, the first isolator bracket 492 fixs and supports four isolators 491, and the second isolator bracket 493 fixs and supports four isolators 491. Optical signals generated by four lasers 431 are coupled to the optical fibers fixed by the third optical fiber-fixing head 473a through the isolators 491 on the first isolator bracket 492, and optical signals generated by the other four lasers 431 are coupled to the optical fibers fixed by the third optical fiber-fixing head 473b through the isolators 491 on the second isolator bracket 493. The first isolator bracket 492 and the second isolator bracket 493 are fixed on the emission base 410.

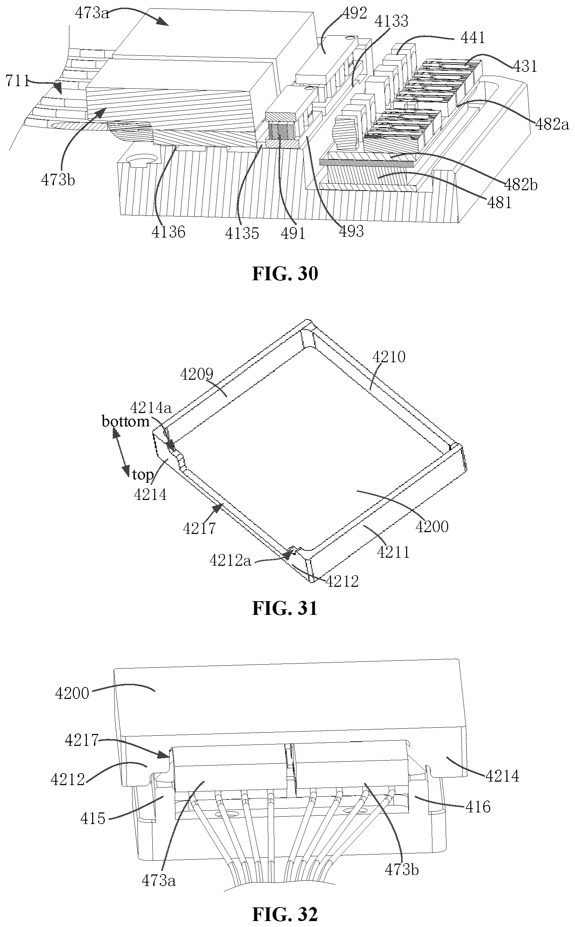

FIG. 29 is a schematic structural diagram of another emission base provided according to some embodiments of the present disclosure, and FIG. 30 is a sectional view of another optical emission component and a circuit board provided according to some embodiments of the present disclosure. In some embodiments, as shown in FIG. 29 and FIG. 30, a first support platform 4133 is provided on the second mounting surface 413, the first support platform 4133 is located at an edge of the second mounting surface 413, and the first support platform 4133 is formed by the second mounting surface 413 protruding towards the upper cover plate 2011. The first support platform 4133 may be located at an edge of the mounting groove 412.

In some embodiments, a first limiting post 4134 is disposed at an edge of the first support platform 4133, and a top surface of the first limiting post 4134 is at a higher level than a top surface of the first support platform 4133. A right side surface of the first limiting post 4134 limits and connects with the first isolator bracket 492. For example, the first limiting post 4134 is disposed on the first support platform 4133 and is disposed at an edge of the top surface of the first support platform 4133.

In some embodiments, a second limiting post 4135 is disposed at the edge of the first support platform 4133, and a top surface of the second limiting post 4135 is at a higher level than the top surface of the first support platform 4133. A right side surface of the second limiting post 4135 limits and connects with the second isolator bracket 493. For example, the second limiting post 4135 is disposed on the first support platform 4133 and is disposed at the edge of the top surface of the first support platform 4133.

In some embodiments, a right end surface of the third optical fiber-fixing head 473a abuts against the first limiting post 4134 to limit the third optical fiber-fixing head 473a through the left side surface of the first limiting post 4134. A right end surface of the third optical fiber-fixing head 473b abuts against the second limiting post 4135 to limit the third optical fiber-fixing head 473b through the left side surface of the second limiting post 4135.

In some embodiments, there is a gap between the second limiting post 4135 and the first limiting post 4134. Of course, in some embodiments, a rear side surface of the second limiting post 4135 and a front side surface of the first limiting post 4134 may be connected to each other.

In some embodiments, a plurality of second support platforms 4136 are disposed on the second mounting surface 413. The second support platforms 4136 support and connect the third optical fiber-fixing head 473. For instance, the third optical fiber-fixing head 473 may be connected with the second support platforms 4136 by glue.

In some embodiments, there is a gap between adjacent second support platforms 4136. When dispensing glue to fix the third optical fiber-fixing head 473, glue may be dispensed into the gaps. The third optical fiber-fixing head 473 is connected to the second mounting surface 413 by glue. The second support platform 4136 supports the third optical fiber-fixing head 473. The gaps can also be used to contain overflow glue. Top surfaces of the second support platforms 4136 have a good flatness, which may ensure the assembly accuracy of the third optical fiber-fixing head 473.

In some embodiments, tops surface of the second support platforms 4136 are lower than the top surface of the first limiting post 4134, and are lower than the top surface of the second limiting post 4135.

In some embodiments, the plurality of second support platforms 4136 are arranged in two rows along the length direction of the optical module, with a gap between the two rows of second support platforms 4136. Each row of second support platforms 4136 includes several second support platforms 4136, with a gap between adjacent second support platforms 4136. For instance, a left row of second support platforms 4136 are located at the left edge of the second mounting surface 413.

In some embodiments, the first baffle plate 415 limits and connects with the third optical fiber-fixing head 473a, and the second baffle plate 416 limits and connects to the third optical fiber-fixing head 473b. As an example, the first baffle plate 415 fixedly connects to the third optical fiber-fixing head 473a via an adhesive glue, and the second baffle plate 416 fixed connects to the third optical fiber-fixing head 473b through an adhesive glue.

In some embodiments, two substrates 482 (substrate 482a and substrate 482b) are disposed on the TEC 481, wherein four lasers 431 and four collimating lenses 441 are disposed on one substrate 482a, and another four lasers 431 and four collimating lenses 441 are disposed on the other substrate 482b.

FIG. 31 is a schematic structural diagram of another emission cover plate provided according to some embodiments of the present disclosure, and FIG. 32 is a diagram illustrating a use state of another emission cover plate provided according to some embodiments of the present disclosure. In some embodiments, as shown in FIG. 31 and FIG. 32, a first cut-off corner 4212a is formed on the eleventh side plate 4212 at an edge of the notch 4217, and a second cut-off corner 4214a is formed on the thirteenth side plate 4214 at an edge of the notch 4217.

In some embodiments, when the emission cover plate 420 is covered on the emission base 410, the emission cover plate 420 covers parts of the third optical fiber-fixing heads 473a and 473b. The third optical fiber-fixing headS 473a and 473b extend across the notch 4217, and ends of the third optical fiber-fixing heads 473a and 473b that are away from the light-emitting component 430 are located outside the notch 4217.

In some embodiments, the first cut-off corner 4212a avoids or makes way for the first baffle plate 415, and the second cut-off corner 4212a avoids or makes way for the second baffle plate 416.

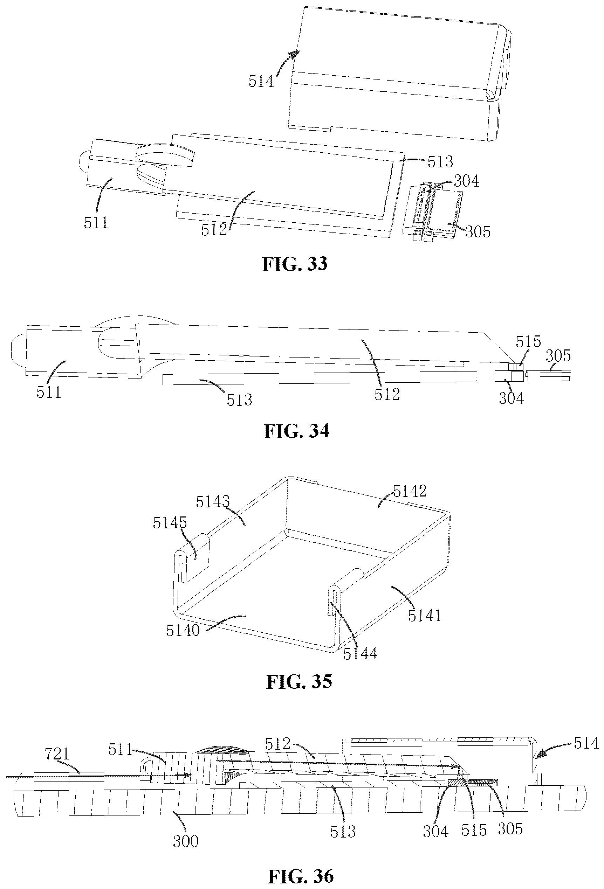

FIG. 33 is a partial exploded schematic diagram of a first optical reception component provided according to some embodiments of the present disclosure, and FIG. 34 is a partial structural schematic diagram of a first optical reception component provided according to some embodiments of the present disclosure. FIG. 33 and FIG. 34 show a structure of a first optical reception component 510. In some embodiments, as shown in FIG. 33 and FIG. 34, the first optical reception component 510 includes an optical collimator 511, an optical splitter 512, a detector group 304 and a transimpedance amplifier group 305. The detector group 304 and the transimpedance amplifier group 305 are arranged on the circuit board 300. A light output end of the optical collimator 511 is connected to a light input end of the optical splitter 512; an output end face of the optical splitter 512 is a reflection surface, which is inclined, and the reflection surface of the optical splitter 512 is located directly above the detector group 304. Exemplarily, the detector group 304 includes a plurality of detectors, e.g., the detector group 304 includes N detectors, for receiving N paths of optical signals.

In some embodiments, the detector group 304 and the transimpedance amplifier group 305 may be directly disposed on the circuit board 300. Of course, in some embodiments of the present disclosure, a substrate may be disposed on the circuit board 300, and the detector group 304 may be disposed on the substrate, such that a height of a photosensitive surface of the detector of the detector group 304 is adjusted through the substrate, and then a distance between the photosensitive surface of the detector and the output end face of the optical splitter 512 is adjusted through the substrate.

In some embodiments, the optical collimator 511 includes a single-mode fiber flange and a collimator. The optical fiber of the optical transmission assembly 700 is inserted into the optical collimator 511 through the single-mode fiber flange. The optical collimator 511 is arranged at a light exiting surface of the internal optical fiber. The optical collimator 511 is configured to convert an external light transmitted by the internal optical fiber into a collimated light. For example, the second optical fiber 721 is inserted into the optical collimator 511 through the single-mode fiber flange.

In some embodiments, the second optical fiber 721 may include one optical fiber, and a beam of composite light input from an external optical fiber is transmitted to the optical collimator 511 through the second optical fiber 721, and then transmitted to the optical splitter 512 through the optical collimator 511. One path of composite light is demultiplexed into multiple paths of lights through the optical splitter 512, and the multiple paths of lights are reflected at the reflection surface of the optical splitter 512, such that the light beam with an optical axis parallel to the circuit board 300 are reflected as a light beam with an optical axis perpendicular to the circuit board 300. In this way, the reflected light beam is transmitted into the detector group 304, achieving light reception.

In some embodiments, the first optical reception component 510 may include a converging lens 515, which is disposed in a reflective optical path of the optical splitter 512. Lights reflected by the reflection surface of the optical splitter 512 are converged to the detector through the converging lens 515, ensuring the receiving performance of the detector through the converging lens 515.

In some embodiments, the converging lens 515 is disposed on the optical splitter 512. Exemplarily, a top of the converging lens 515 is connected to a bottom of the optical splitter 512. Of course, the converging lens 515 may be directly disposed on the detector group 304.

After the detector of the detector group 304 receives the light beam reflected by the optical splitter 512, the detector converts the optical signal into an electrical signal, which is transmitted to the transimpedance amplifier group 305 via wire bonding. After being amplified by the transimpedance amplifier, the electrical signal is transmitted to the gold finger 301 via a signal line. The amplified electrical signal is transmitted to the host computer via the gold finger 301, thereby realizing reception of multiple paths of lights.

In some embodiments, when the light reflected by the output end face of the optical splitter 512 enters the detector, due to the difference of transmission media, the light may be reflected at the photosensitive surface of the detector, and the reflected light may return to the optical splitter 512 along the original path. The reflected light returns to the optical collimator 511 via the optical splitter 512, causing the reflected light and the composite light transmitted by the internal optical fiber to crosstalk in the optical collimator 511.

In order to avoid optical signal crosstalk, the first optical reception component 510 further includes a support plate 513. A bottom surface of the support plate 513 is mounted on the back surface of the circuit board 300, and a top surface of the support plate 513 is tiltedly arranged. The optical splitter 512 is mounted on the top surface of the support plate 513, such that the optical splitter 512 is tiltedly arranged, that is, a distance between the optical splitter 512 and the back surface of the circuit board 300 gradually decreases in the left-right direction (light receiving direction). In this way, the light reflected at the photosensitive surface of the detector returns to the reflection surface of the optical splitter 512, and the reflected light is reflected again at the reflection surface. Since the optical splitter 512 is tiltedly arranged, the light reflected at the reflection surface is at a certain angle with a reception light transmitted by the optical splitter 512, thereby avoiding crosstalk between the reflected light and the reception light.

In some embodiments, the optical splitter 512 may employ an optical splitter device based on arrayed waveguide grating (AWG) technology to achieve optical splitting and coupling effects. A tilt angle between the optical splitter 512 and the circuit board 300 is 2°.

In some embodiments, the first optical reception component 510 may include a reception case 514, which is covered on the back surface of the circuit board 300. A cavity is formed between the reception case 514 and the back surface of the circuit board 300. Part of the optical splitter 512, the detector group 304 and the transimpedance amplifier group 305 are located in the cavity to protect the detector group 304 and the transimpedance amplifier group 305 through the reception case 514.

FIG. 35 is a schematic structural diagram of a reception case provided according to some embodiments of the present disclosure. In some embodiments, as shown in FIG. 35, the reception case 514 includes a reception cover plate 5140, a first reception side plate 5141, a second reception side plate 5142 and a third reception side plate 5143. An outer side of the reception cover plate 5140 faces the lower shell part 202. The first reception side plate 5141, the second reception side plate 5142 and the third reception side plate 5143 are respectively fixedly connected to the reception cover plate 5140. The second reception side plate 5142 is the right side of the reception case 514, and the two ends of the second reception side plate 5142 are respectively fixedly connected to the first reception side plate 5141 and the third reception side plate 5143. The first reception side plate 5141 and the third reception side plate 5143 are arranged opposite to each other. In this way, the reception cover plate 5140, the first reception side plate 5141, the second reception side plate 5142 and the third reception side plate 5143 form a case with an opened upper side and an opended left side.

When the reception case 514 is covered onto the back surface of the circuit board 300, the first reception side plate 5141, the second reception side plate 5142 and the third reception side plate 5143 are supported and connected to the back surface of the circuit board 300. The first reception side plate 5141, the second reception side plate 5142 and the third reception side plate 5143 are respectively bonded to the back surface of the circuit board 300 by solid glue to achieve a fixed connection between the reception case 514 and the circuit board 300.

In some embodiments, a first positioning claw 5144 is formed on the first reception side plate 5141. The first positioning claw 5144 extends from an inner side of the first reception side plate 5141 towards the third reception side plate 5143, and a left side surface of the first positioning claw 5144 is flush with the left side surface of the first reception side plate 5141. The first positioning claw 5144 is configured such that the reception case 514 can position and connect the circuit board 300.

In some embodiments, a second positioning claw 5145 is formed on the third reception side plate 5143. The second positioning claw 5145 extends from an inner side of the third reception side plate 5143 towards the first reception side plate 5141, and a left side surface of the second positioning claw 5145 is flush with a left side surface of the third reception side plate 5143. The second positioning claw 5145 is configured such that the reception case 514 can position and connect the circuit board 300.

The reception case 514 is covered on the circuit board 300, and the reflection surface of the optical splitter 512, the converging lens 515, the detector group 304 and the transimpedance amplifier group 305 are located in the cavity formed by the reception case 514 and the circuit board 300, so as to protect the detector group 304 and the transimpedance amplifier group 305, etc., through the cavity.

FIG. 36 is a sectional view of an optical reception component and a circuit board provided according to some embodiments of the present disclosure. In some embodiments, as shown in FIG. 36, the light input end of the optical collimator 511 is connected to the second optical fiber 721, and the light output end of the optical collimator 511 is fixedly connected to the light input end of the optical splitter 512; the detector group 304 and the transimpedance amplifier group 305 are arranged on the surface of the circuit board 300, the transimpedance amplifier group 305 is located at a right side of the detector group 304; the support plate 513 is arranged on the surface of the circuit board 300 and at a left side of the detector group 304; the optical splitter 512 is connected to the support plate 513, such that the optical splitter 512 is tiltedly arranged through the support plate 513. One path of composite light is input to the optical collimator 511 through the second optical fiber 721, and is transmitted to the optical splitter 512 through the optical collimator 511. The optical splitter 512 splits the path of composite light into multiple paths of lights. The multiple paths of lights are reflected by the reflection surface of the optical splitter 512. The reflected lights are converged to the corresponding detectors of the detector group 304 through the converging lens 515.

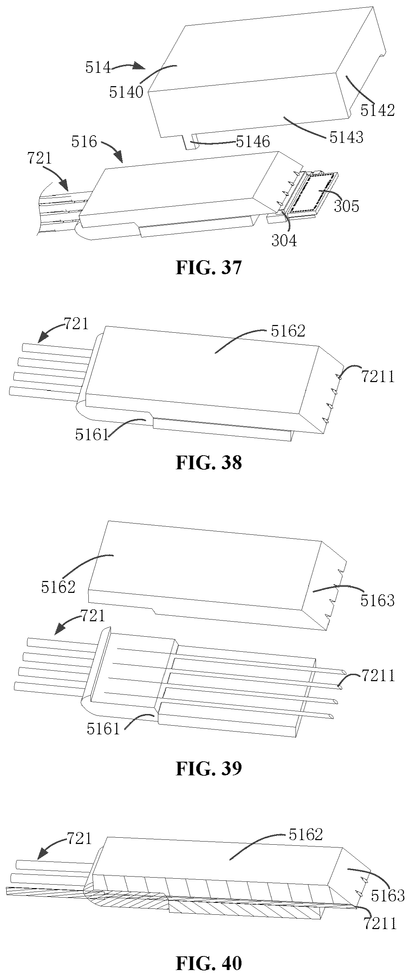

FIG. 37 is an exploded schematic diagram of another first optical reception component provided according to some embodiments of the present disclosure. In some embodiments, as shown in FIG. 37, the first optical reception component 510 includes a reception fixing head 516. The reception fixing head 516 fixedly connects the second optical fiber 721. A light output end of the reception fixing head 516 is located above the detector group 304, and the second optical fiber 721 passes through the reception fixing head 516, such that an end face of the second optical fiber 721 extends above the detector group 304. An optical signal transmitted through the second optical fiber 721 is transmitted to a top portion above the detector group 304, and is reflected by the end face of the optical fiber in the second optical fiber 721 and transmitted to the corresponding detector of the detector group 304.

In some embodiments, a positioning column 5146 is disposed at a bottom of the third reception side plate 5143. The positioning column 5146 is configured to position and connect the reception case 514 on the circuit board 300. Exemplarily, the positioning column 5146 is located at a front end of the third reception side plate 5143.

In some embodiments, a positioning column may also be disposed at a bottom of the first reception side plate 5141. The disposition of this positioning column at the first reception side plate 5141 may refer to the disposition of the positioning column 5146 at the third reception side plate 5143.

In some embodiments, the second optical fiber 721 includes multiple optical fibers for transmitting multiple paths of optical signals. The light output end of the reception fixing head 516 is located above the detector group 304. The detector group 304 includes multiple detectors. Multiple paths of optical signals transmitted by the second optical fiber 721 are transmitted to a top portion above the detector group 304, and are reflected by the end face of the optical fiber of the second optical fiber 721 to the corresponding detectors of the detector group 304.

FIG. 38 is a schematic structural diagram of a reception fixing head provided according to some embodiments of the present disclosure, FIG. 39 is an exploded schematic diagram of a reception fixing head provided according to some embodiments of the present disclosure, and FIG. 40 is a sectional view of a reception fixing head provided according to some embodiments of the present disclosure. In some embodiments, as shown in FIG. 38 to FIG. 40, the reception fixing head 516 includes an optical fiber-supporting portion 5161 and an optical fiber-fixing portion 5162. An end of the second optical fiber 721 extends from one end of the optical fiber-supporting portion 5161 to the other end of the optical fiber-supporting portion 5161, and the optical fiber-supporting portion 5161 supports and connects the second optical fiber 721. The optical fiber-fixing portion 5162 covers the optical fiber-supporting portion 5161 to fix the end of the second optical fiber 721 through the optical fiber-supporting portion 5161 and the optical fiber-fixing portion 5162.

In some embodiments, a reflection end face 7211 is provided at the end of the optical fiber of the second optical fiber 721. The reflection end face 7211 is located above the detector group 304, and is configured to reflect and change a transmission direction of an optical signal transmitted by the second optical fiber 721, so as to reflect the optical signal transmitted by the second optical fiber 721 to the corresponding detector of the detector group 304.

In some embodiments, the reflection end face 7211 is an inclined surface. The reception optical signal transmitted by the second optical fiber 721 is totally reflected at the reflection end face 7211. Exemplarily, an inclination angle of the reflection end face 7211 is 46°-50°, such as 48°.

In some embodiments, the second optical fiber 721 passes through one end of the optical fiber-supporting portion 5161 and extends outside of the other end of the optical fiber-supporting portion 5161, such that the reflection end face 7211 is located outside the other end of the optical fiber-supporting portion 5161. One end of the optical fiber-fixing portion 5162 is connected to one end of the optical fiber-supporting portion 5161, and the other end of the optical fiber-fixing portion 5162 is located outside the other end of the optical fiber-supporting portion 5161. The other end of the optical fiber-fixing portion 5162 is fixedly connected to the end of the second optical fiber 721 to support the end of the second optical fiber 721. In this way, the other end of the optical fiber-supporting portion 5161 is shorter than the other end of the optical fiber-fixing portion 5162, which facilitates the reception fixing head 516 to avoid the detector group 304 and ensures the adaptability of the reception fixing head 516.

In some embodiments, a protective surface 5163 is formed at the other end of the optical fiber-fixing portion 5162. The protective surface 5163 surrounds the reflection end face 7211 to protect the reflection end face 7211. Exemplarily, the protective surface 5163 is an inclined surface, and an inclination angle of the protective surface 5163 is 46° to 50°, for example, the inclination angle of the protective surface 5163 is 48°.

In some embodiments, the second optical fiber 721 includes four optical fibers, which are arranged side by side on the optical fiber-supporting portion 5161. The detector group 304 includes four detectors. Four paths of optical signals are transmitted through the four optical fibers of the second optical fiber 721, and are then reflected to the corresponding detectors through the corresponding reflection end faces 7211.

In some embodiments, a bottom of the optical fiber-supporting portion part 5161 is connected to the circuit board 300. In some embodiments, a support plate 513 is provided on the circuit board 300, and the support plate 513 supports and connects the optical fiber-supporting portion part 5161.

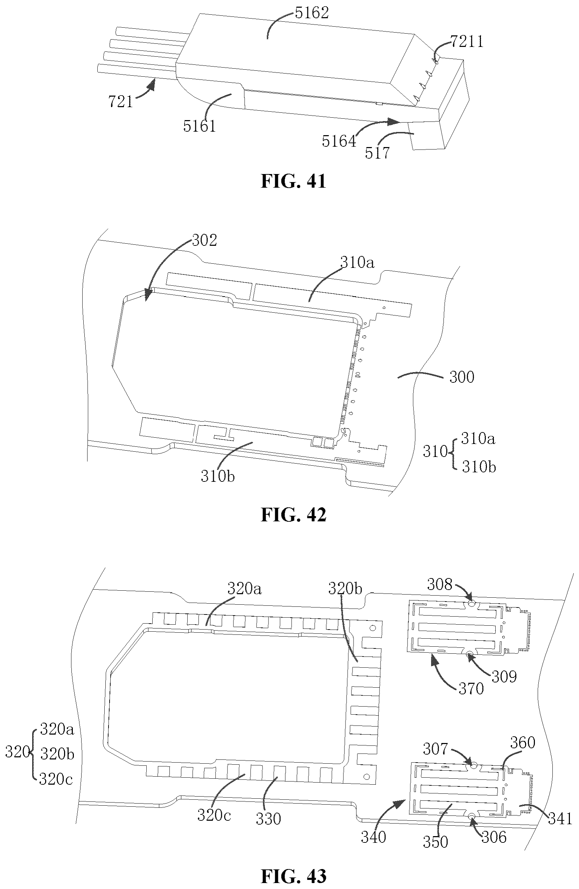

FIG. 41 is a schematic structural diagram of another reception fixing head provided according to some embodiments of the present disclosure. In some embodiments, as shown in FIG. 41, the first optical reception component 510 may include a lens array 517, which is arranged in the optical path from the reflection end face 7211 to the detector group 304, and is configured to converge and transmit the optical signal reflected by the reflection end face 7211.

In some embodiments, a lens mounting surface 5164 is provided at a bottom of the other end of the optical fiber-supporting portion 5161. The lens mounting surface 5164 is located above the detector group 304, and the lens array 517 is fixedly connected to the lens mounting surface 5164. Exemplarily, the lens mounting surface 5164 is an inclined surface, such that A normal line of the lens mounting surface 5164 is not perpendicular to an extension direction of the second optical fiber 721. An inclination angle of the lens mounting surface 5164 is 5°-10°, for example, the inclination angle of the lens mounting surface 5164 is 8°.

In some embodiments, the other end of the optical fiber-supporting portion 5161 extends beyond the reflection end face 7211 to provide sufficient space for arranging the lens mounting surface 5164.

In some embodiments, the second optical reception component 520 includes N detectors for receiving N paths of optical signals. The configuration of the second optical reception component 520 may be the same as or similar to that of the first optical reception component 510. The specific configuration of the second optical reception component 520 may refer to the first optical reception component 510 provided in the above embodiment.

In some embodiments, the second optical reception component 520 receives an optical signal transmitted through a third optical fiber 731. The configuration of the third optical fiber 731 may refer to the configuration of the second optical fiber 721 in the above example.

FIG. 42 is a partial schematic diagram of a circuit board provided according to some embodiments of the present disclosure. In some embodiments, as shown in FIG. 42, a first connection layer 310 is provided at an edge of the mounting hole 302, and the first connection layer 310 is attached to the top surface of the circuit board 300. The emission cover plate 420 is bonded to the first connection layer 310 by glue to achieve the fixed connection of the emission cover plate 420 to the circuit board 300. The first connection layer 310 facilitates to reinforce the connection between the emission cover plate 420 and the circuit board 300 to ensure the bonding firmness between the emission cover plate 420 and the circuit board 300.

In some embodiments, the first connection layer 310 may be a metal layer attached to the top surface of the circuit board 300, such as a copper layer, a gold layer, etc., attached to the top surface of the circuit board 300.

In some embodiments, first connection layers 310a and 310b are provided at edges of the mounting hole 302, wherein the first connection layer 310a is located at one side of the mounting hole 302 in a length direction of the mounting hole, and the first connection layer 310b is located at the other side of the mounting hole 302 in the length direction. The first connection layers 310a and 310b are respectively bonded and connected to bottoms of the side plates of the emission cover plate 420.

In some embodiments, the first connection layer 310 may be a metal layer attached to the surface of the circuit board 300, such as a copper layer.

FIG. 43 is a partial schematic diagram of a circuit board provided according to some embodiments of the present disclosure. In some embodiments, as shown in FIG. 43, a second connection layer 320 is provided at an edge of the mounting hole 302, and the second connection layer 320 is attached to the back surface of the circuit board 300. The emission base 410 is bonded to the second connection layer 320 by glue to achieve the fixed connection of the emission base 410 to the circuit board 300. The second connection layer 320 facilitates to reinforce the connection between the emission base 410 and the circuit board 300 to ensure the bonding firmness between the emission base 410 and the circuit board 300. Exemplarily, the second connection layer 320 is a metal layer attached to the back surface of the circuit board 300, such as a copper layer, a gold layer, etc., attached to the top surface of the circuit board 300.

In some embodiments, the second connection layer 320 is provided with a first groove 330. A bottom of the first groove 330 extends into the circuit board 300, and the first groove 330 is configured to break the second connection layer 320. For example, the second connection layer 320 is provided with a plurality of first grooves 330, and intervals between adjacent first grooves 330 are equal or similar. With the second connection layer 320 being provided with the first grooves 330, flatness of the second connection layer 320 is reduced, which facilitates relatively reducing the bonding force of the second connection layer 320 with the emission base 410, and thus can reduce the damage to the circuit board 300 caused by removing the emission base 410 for repairing.

In some embodiments, a width of the first grooves 330 and the intervals between adjacent first grooves 330 are equal to or similar to each other, so as to balance the bonding strength between the emission base 410 and the circuit board 300.

In some embodiments, second connection layers 320a, 320b and 320c are arranged at edges of the mounting hole 302. As shown in FIG. 43, the second connection layer 320a is located at an upper side of the mounting hole 302, the second connection layer 320b is located at a right side of the mounting hole 302, and the second connection layer 320c is located at a lower side of the mounting hole 302. The second connection layer 320a, the second connection layer 320b and the second connection layer 320c are respectively bonded and connected to the first mounting surface 411 of the emission base 410.

A first groove 330 is provided on the second connection layer 320a, the second connection layer 320b or the second connection layer 320c. Of course, in some embodiments, the second connection layer 320a, the second connection layer 320b and the second connection layer 320c are all provided with the first groove 330; and the second connection layer 320a, the second connection layer 320b and the second connection layer 320c are respectively continuous, so as to better balance the bonding force between the emission base 410 and the circuit board 300.

In some embodiments, a groove may be provided on the first connection layer 310. For example, grooves may be provided on the first connection layer 310a and the first connection layer 310b, respectively.

In some embodiments, a third connection layer 340 is further disposed on the back surface of the circuit board 300, and the third connection layer 340 is located in the projection area of the first optical reception component 510 in the direction of the circuit board 300. Exemplarily, the third connection layer 340 bonds and connects the optical splitter 512, the support plate 513 or the reception fixing head 516, etc. In the embodiment of the present disclosure, the third connection layer 340 may be disposed on the front surface of the circuit board 300.

In some embodiments, a second groove 350 is provided on the third connection layer 340, and a bottom of the second groove 350 extends into the circuit board 300. The second groove 350 is configured to break the third connection layer 340. For example, the second groove 350 extends along the length direction of the circuit board 300. The second groove 350 is configured to balance the bonding force between the optical splitter 512, the support plate 513 or the reception fixing head 516 and the circuit board 300, so as to effectively reduce the damage to the circuit board 300 caused by removal of the optical splitter 512, the support plate 513 or the reception fixing head 516 for repairing. The second groove 350 may include a plurality of grooves, which are arranged side by side and extend along the length direction of the circuit board 300.

In some embodiments, the third connection layer 340 includes a welding portion 341, which is located at a side of the third connection layer 340 away from the mounting hole 302. The welding portion 341 connects the detector group 304 and the transimpedance amplifier group 305 by welding.

In some embodiments, a blocking groove 360 may be provided on the third connection layer 340, and the blocking groove 360 is located at an edge of the welding portion 341 to prevent glue from overflowing and flowing towards the welding portion 341. For instance, the blocking groove 360 extends from the edge of the welding portion 341 in a direction away from the welding portion 341, such that the blocking groove 360 extends to edges of the third connection layer 340, so as to prevent the glue from overflowing and flowing to an area outside the third connection layer 340 through the blocking groove 360.

In some embodiments, a width of the blocking groove 360 is smaller than a width of the second groove 350. Exemplarily, the blocking groove 360 is intermittently extended surrounding the second cut groove 350, and there is a gap between the second cut groove 350 and the blocking groove, so as to balance the bonding force between the third connecting layer 340 and the support plate 513, etc., and to prevent the glue from overflowing outside the third connecting layer 340.

In some embodiments, edges of the third connection layer 340 is provided with a first positioning recess 306 and a second positioning recess 307, wherein the first positioning recess 306 is located on one side of the third connection layer 340, and the second positioning recess 307 is located on the other side of the third connection layer 340. The first positioning recess 306 and the second positioning recess 307 are configured to position and connect the reception case 514, for example, the first positioning recess 306 is provided to position and connect the first positioning claw 5144 or the positioning column 5146.

In some embodiments, the first positioning recess 306 or the second positioning recess 307 is a circular groove or a waist-shaped groove. For instance, the first positioning recess 306 is located at an edge of the circuit board 300.

In some embodiments, a fourth connection layer 370 is further disposed on the back surface of the circuit board 300, and the fourth connection layer 370 is located in the projection area of the second optical reception component 520 in the direction of the circuit board 300. The structural form of the fourth connection layer 370 can refer to the third connection layer 340. In some embodiments, a third positioning recess 308 and a fourth positioning recess 309 are disposed at edges of the fourth connection layer 370.

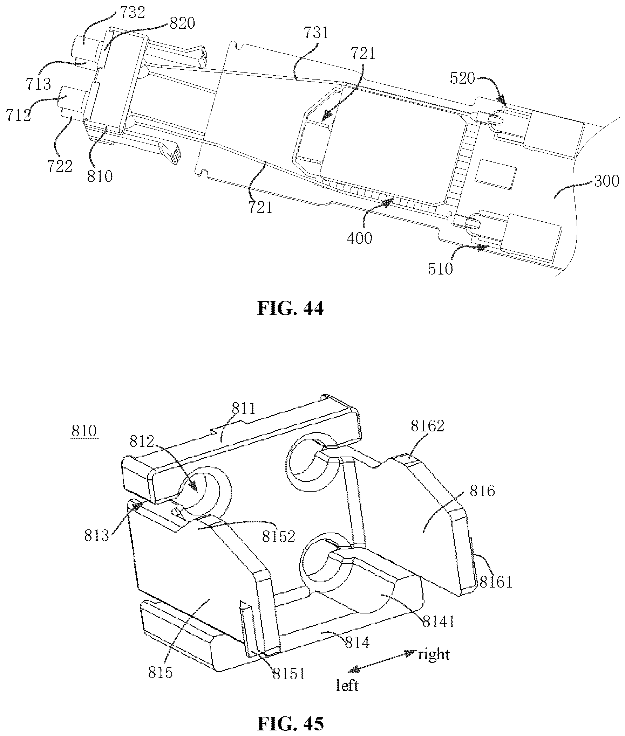

FIG. 44 is a partial schematic diagram of an interior of an optical module provided according to some embodiments of the present disclosure, and FIG. 44 shows a use state of an adapter-fixing component. In some embodiments, the first transmission group 710 may include a first optical fiber adapter 712, and the first optical fiber adapter 712 is connected to some optical fibers of the first optical fiber 711. The first optical fiber adapter 712 is connected to the optical fiber-fixing component 800, so as to fix the first optical fiber adapter 712 to the optical port of the optical module through the optical fiber-fixing component 800. Some of the optical fibers of the first optical fiber 711 are optically connected to an external optical fiber through the first optical fiber adapter 712, and the optical signal transmitted by the first optical fiber 711 is coupled to the external optical fiber at the first optical fiber adapter 712.

In some embodiments, the first transmission group 710 may include a second optical fiber adapter 713, and the second optical fiber adapter 713 connects some optical fibers of the first optical fiber 711. The second optical fiber adapter 713 is connected to the optical fiber-fixing component 800, such that the second optical fiber adapter 713 is fixed to the optical port of the optical module through the optical fiber-fixing component 800. Some of the optical fibers of the first optical fiber 711 are optically connected to an external optical fiber through the second optical fiber adapter 713, and the optical signal transmitted by the first optical fiber 711 is coupled to the external optical fiber at the second optical fiber adapter 713.

In some embodiments, the second transmission group 720 may include a third optical fiber adapter 722, and the third optical fiber adapter 722 is connected to the second optical fiber 721. The third optical fiber adapter 722 is connected to the optical fiber-fixing component 800, such that the third optical fiber adapter 722 is fixed to the optical port of the optical module through the optical fiber-fixing component 800. The second optical fiber 721 is optically connected to an external optical fiber through the third optical fiber adapter 722, and an optical signal transmitted by the external optical fiber is coupled to the second optical fiber 721 at the third optical fiber adapter 722.

In some embodiments, the third transmission group 730 may include a fourth optical fiber adapter 732, and the fourth optical fiber adapter 732 connects the third optical fiber 731. The fourth optical fiber adapter 732 is connected to the optical fiber-fixing component 800, so as to fix the third optical fiber adapter 722 to the optical port of the optical module through the optical fiber-fixing component 800. The third optical fiber 731 is optically connected to an external optical fiber through the fourth optical fiber adapter 732, and an optical signal transmitted by the external optical fiber is coupled to the third optical fiber 731 at the fourth optical fiber adapter 732.

In some embodiments, the optical fiber-fixing component 800 may include an optical fiber-fixing frame 810. The first optical fiber adapter 712 and the like are fixedly connected to the optical fiber-fixing frame 810. The optical fiber-fixing frame 810 is assembled at the optical port of the optical module, for example, the optical fiber-fixing frame 810 is fixedly connected to the lower shell part 202, and the like, such that the first optical fiber adapter 712 and the like are fixed in the optical port of the optical module through the optical fiber-fixing frame 810.

In some embodiments, the optical fiber-fixing component 800 may include a gasket 820, which is assembled and connected to the first optical fiber adapter 712, etc., such that the first optical fiber adapter 712 or the like is connected to the shell of the optical module in a sealed manner. For example, the first optical fiber adapter 712, etc. is connected to the lower shell part 202 through the gasket 820 in a sealed manner to fix the first optical fiber adapter 712, etc., and reduce movement of the first optical fiber adapter 712, etc., when plugging or unplugging an external optical fiber.

In some embodiments, the gasket 820 may be referred to as a shielding plate. For example, the gasket 820 may be a shielding gasket to shield electromagnetic radiation. Electrical devices on the circuit board 300, optical devices of the optical emission component 400, and electrical devices of the optical reception component 500 may have various electromagnetic wave radiation problems during working, which may easily cause electromagnetic interference (EMI) of the optical module to exceed a standard level. By providing a shielding gasket on the first optical fiber adapter 712, etc., achieve electromagnetic compatibility (EMC) shielding of the optical module may be achieved through the shielding gasket.

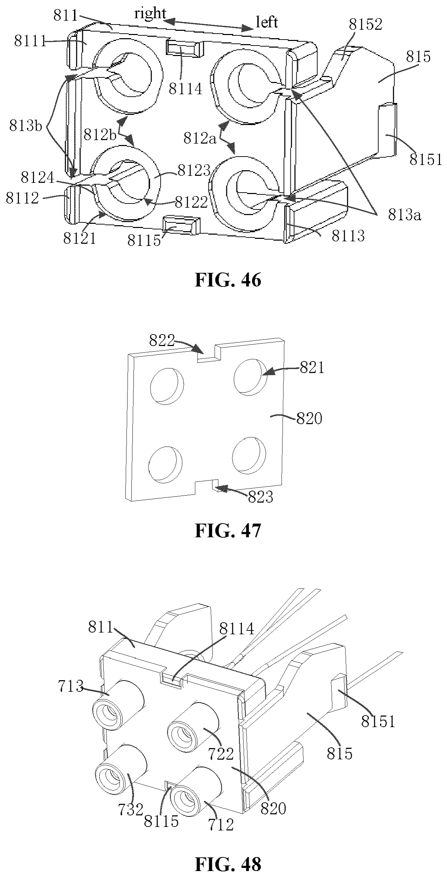

FIG. 45 is a first schematic structural diagram of a fixing frame provided according to some embodiments of the present disclosure, and FIG. 46 is a second schematic structural diagram of a fixing frame provided according to some embodiments of the present disclosure. In some embodiments, the optical fiber-fixing frame 810 includes a fixing plate 811, and the fixing plate 811 is configured to connect the first optical fiber adapter 712, etc. The fixing plate 811 is provided thereon with a first assembly hole 812 which passes through the fixing plate 811. The first assembly hole 812 is configured to assemble and connect the optical fiber adapter 712, etc. A slit 813 is formed on an edge of the fixing plate 811. The slit 813 is communicated to the first assembly hole 812. Exemplarily, a plurality of first assembly holes 812 are provided on the fixing plate 811, and a plurality of slits 813 are formed on the edge of the fixing plate 811, and the slits 813 are correspondingly communicated to the corresponding first assembly holes 812. The slits 813 may be located at a left edge, a right edge, an upper edge or a lower edge of the fixing plate 811.

In some embodiments, a width of the slit 813 is less than one quarter of the inner diameter of the first assembly hole 812.

In some embodiments, a first row of assembly holes 812a and a second row of assembly holes 812b are provided in the fixing plate 811, wherein the first row of assembly holes 812a is located at a left side of the fixing plate 811, and the second row of assembly holes 812b is located at a right side of the fixing plate 811. For instance, the first row of assembly holes 812a and the second row of assembly holes 812b respectively include two first assembly holes 812, so as to form four first assembly holes 812 arranged in two rows on the fixing plate 811.

In some embodiments, a first row of slits 813a is provided at a left edge of the fixing plate 811, and a second row of slits 813b is provided at a right edge of the fixing plate 811. The slits of the first row of slits 813a correspondingly communicate to the first assembly holes 812 of the first row of assembly holes 812a, and the slits of the second row of slits 813b correspondingly communicate to the first assembly holes 812 of the second row of assembly holes 812b.

In some embodiments, the optical fiber-fixing frame 810 may include a connecting plate 814, which is located at a bottom of the fixing plate 811 and connected to the fixing plate 811. The connecting plate 814 is assembled and connected to the lower shell part 202, such that the optical fiber-fixing frame 810 is seated in the lower shell part 202 through the connecting plate 814, thereby facilitating the assembly of the optical fiber-fixing frame 810 in the lower shell part 202.

In some embodiments, an avoidance groove 8141 is provided on a top surface of the connecting plate 814, and a bottom surface of the connecting plate 814 is assembled and connected with the bottom plate 2021. One end of the avoidance groove 8141 is located below the first assembly hole 812 and passes through the connecting plate 814. The avoidance groove 8141 is configured to avoid or make way for the optical fiber adapter.

In some embodiments, the first assembly hole 812 includes a fixing portion 8121 and a limiting portion 8122. The fixing portion 8121 is located in front of the limiting portion 8122, and a step surface 8123 is formed between the fixing portion 8121 and the limiting portion 8122. An assembly bevel 8124 is provided on the fixing portion 8121, and the step surface 8123 and the assembly bevel 8124 cooperate to assemble and connect the optical fiber adapter.

In some embodiments, the optical fiber-fixing frame 810 may include a first fixing arm 815 and a second fixing arm 816. The first fixing arm 815 and the second fixing arm 816 are configured to connect the optical fiber-fixing frame 810 to the lower shell part 202. Exemplarily, one end of the first fixing arm 815 is connected to a left side of the fixing plate 811, one end of the second fixing arm 816 is connected to a right side of the fixing plate 811, and the other end of the first fixing arm 815 and the other end of the second fixing arm 816 are assembled with the lower side plate 2022.

In some embodiments, a first positioning protrusion 8151 is disposed on an outer side of the other end of the first fixing arm 815. The first positioning protrusion 8151 is protruded relative to the outer side of the first fixing arm 815. The first positioning protrusion 8151 limits and connects an inner wall of the lower side plate 2022.

In some embodiments, a first limiting protrusion 8152 is formed on a top of the first fixing arm 815. The first limiting protrusion 8152 is formed by the top surface of the first fixing arm 815 protruding outwards, and a top surface of the first limiting protrusion 8152 is at a higher level than the slit 813. The first limiting protrusion 8152 is configured to limit the optical fiber to restrain the optical fiber inside of the first fixing arm 815 so as to prevent the optical fiber from extending to an outer side of the first fixing arm 815 and causing damage to the optical fiber. The first limiting protrusion 8152 is located at a middle and rear part of the first fixing arm 815.

In some embodiments, a second positioning protrusion 8161 is provided on an outer side of the other end of the second fixing arm 816, the second positioning protrusion 8161 protrudes from the outer side of the second fixing arm 816, and the second positioning protrusion 8161 limits and connects to an inner wall of the lower side plate 2022.

In some embodiments, a second limiting protrusion 8162 is formed on a top of the second fixing arm 816. The second limiting protrusion 8162 is formed by a top surface of the second fixing arm 816 protruding outwards, and a top surface of the second limiting protrusion 8162 is at a higher level than that of the slit 813. The second limiting protrusion 8162 is configured to limit the optical fiber to restrain the optical fiber inside of the second fixing arm 816 so as to prevent the optical fiber from extending to an outer side of the second fixing arm 816 and causing damage to the optical fiber. The second limiting protrusion 8162 is located at a middle and rear part of the second fixing arm 816.

In some embodiments, one end of the first fixing arm 815 is located between the slits of first row of slits 813a. Exemplarily, the slits 813 of the first row of slits 813a are arranged along an upper side and a lower side of the first fixing arm 815, which can facilitate the processing of the slits 813 and ensure the connection strength between the first fixing arm 815 and the fixed plate 811.

In some embodiments, one end of the second fixing arm 816 is located between the slits of the second row of slits 813b. Exemplarily, the slits 813 of the second row of slits 813b are arranged along an upper side and a lower side of the second fixing arm 816, which can facilitate the processing of the slits 813 and ensure the connection strength between the second fixing arm 816 and the fixing plate 811.

In some embodiments, the fixing plate 811 includes a mounting surface 8111, and the mounting surface 8111 is configured to contact and connect the gasket 820.

In some embodiments, a limiting boss is formed on the fixing plate 811. The limiting boss is disposed on an edge of the fixing plate 811, and the limiting boss is formed by an edge of the mounting surface 8111 protruding outwards.

In some embodiments, a first limiting boss 8112 and a second limiting boss 8113 are formed on the fixing plate 811, wherein the first limiting boss 8112 is located at a left edge of the fixing plate 811, and the second limiting boss 8113 is located at a right edge of the fixing plate 811. The first limiting boss 8112 and the second limiting boss 8113 are used to limit and connects sides of the gasket 820. Exemplarily, the first row of slits 813a run through the first limiting boss 8112, and the second row of slits 813b run through the second limiting boss 8113.

In some embodiments, a third limiting boss 8114 is formed on the fixing plate 811, and the third limiting boss 8114 is located at an upper edge of the mounting surface 8111 and between the first row of assembly holes 812a and the second row of assembly holes 812b. The third limiting boss 8114 is configured to limit and connect the gasket 820.

In some embodiments, a fourth limiting boss 8115 is formed on the fixing plate 811, and the fourth limiting boss 8115 is located at a lower edge of the mounting surface 8111 and between the first row of assembly holes 812 a and the second row of assembly holes 812b. The fourth limiting boss 8115 is configured to limit and connect the gasket 820.

FIG. 47 is a schematic structural diagram of a gasket provided according to some embodiments of the present disclosure, and FIG. 48 is a diagram showing a use state of an optical fiber-fixing frame provided according to some embodiments of the present disclosure. As shown in FIG. 47, a second assembly hole 821 is provided on the gasket 820, and the second assembly hole 821 passes through the gasket 820. The second assembly hole 821 is configured to assemble and connect the optical fiber adapter. For example, a plurality of second assembly holes 821 are formed on the gasket 820; for example, four second assembly holes 821 arranged in two rows, with two second assembly holes in each row, are formed on the gasket 820.

In some embodiments, an upper edge of the gasket 820 is provided with a first slot 822, which penetrates the gasket 820. The third limiting boss 8114 is assembled and connected in the first slot 822. For instance, a height of the third limiting boss 8114 is less than or equal to a thickness of the gasket 820.

In some embodiments, a second slot 823 is formed at a lower edge of the gasket 820, and the second slot 823 penetrates the gasket 820. The fourth limiting boss 8115 is assembled and connected to the second slot 82. For example, a height of the fourth limiting boss 8115 is less than or equal to a thickness of the gasket 820.

In some embodiments, an assembly process of the optical fiber adapter, the optical fiber-fixing frame 810 and the gasket 820 is as follows: first, an optical fiber at a tail of the optical fiber adapter is installed into the first assembly hole 812 through the slit 813; then the optical fiber is dragged to make the optical fiber adapter cooperate and connect with the step surface 8123 and the assembly bevel 8124 of the first assembly hole 812; then the gasket 820 is put on the optical fiber adapter; and finally the gasket 820 is pushed towards the fixing plate 811, such that the gasket 820 is located between the first limiting boss 8112 and the second limiting boss 8113, the first slot 822 is assembled and connected to the third limiting boss 8114, and the second slot 823 is assembled and connected to the fourth limiting boss 8115.

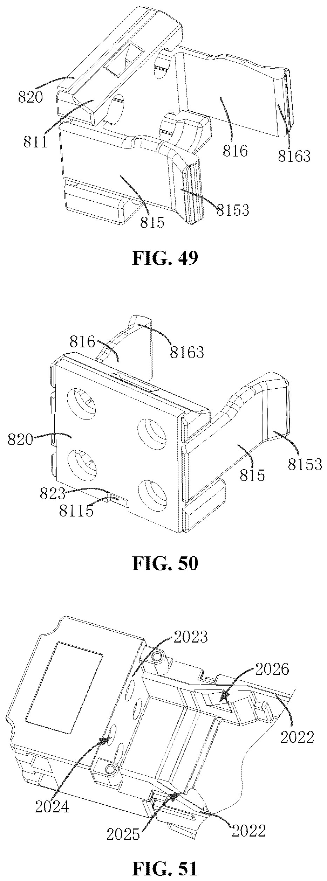

FIG. 49 is a schematic structural diagram of another optical fiber-fixing frame provided according to some embodiments of the present disclosure, and FIG. 50 is a schematic diagram showing an assembly of another optical fiber-fixing frame and a gasket provided according to some embodiments of the present disclosure. In some embodiments, as shown in FIG. 49 and FIG. 50, an outer wall of the other end of the first fixing arm 815 is protruded outwardly to form a first assembly portion 8153, and the first assembly portion 8153 is to be assembled and connected to the inner wall of the lower side plate 2022. A thickness of the other end of the first fixing arm 815 is greater than a thickness of the one end of the first fixing arm 815, which is convenient for improving the strength of the other end of the first fixing arm 815. Exemplarily, the first assembly portion 8153 is formed by the other end of the first fixing arm 815 extending to left and right sides of the first fixing arm 815. The first assembly portion 8153 is convenient for increasing the assembly firmness of the first fixing arm 815 and the lower side plate 2022, reducing a possibility of loosening of the optical fiber-fixing frame, and the first assembly portion 8153 is also convenient for the molding of the first fixing arm 815.

In some embodiments, the other end of the second fixing arm 816 is formed with a second assembly portion 8163, and a thickness of the second assembly portion 8163 is greater than a thickness of the one end of the second fixing arm 816. The second assembly portion 8163 is assembled and connected to the inner side wall of the lower side plate 2022. Exemplarily, the second assembly portion 8163 is formed by the other end of the second fixing arm 816 expanding to left and right sides of the second fixing arm 816. The second assembly portion 8163 is convenient for increasing the assembly firmness of the second assembly portion 8163 and the lower side plate 2022, reducing a possibility of loosening of the optical fiber-fixing frame, and the second assembly portion 8163 is also convenient for the molding of the second fixing arm 816.

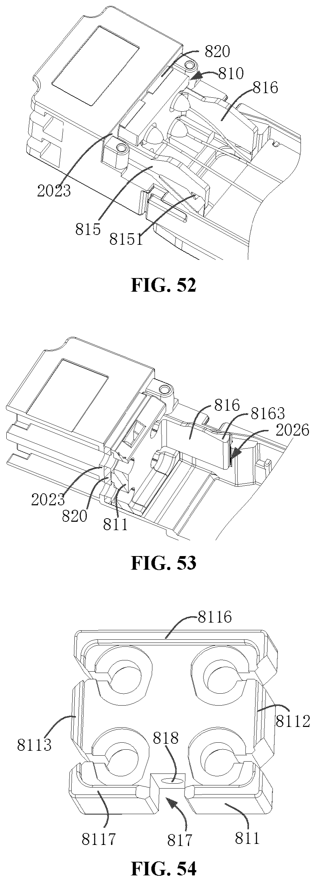

FIG. 51 is a partial schematic diagram of a lower shell part provided according to some embodiments of the present disclosure, FIG. 52 is a first diagram of a lower shell part in use according to some embodiments of the present disclosure, and FIG. 53 is a second diagram of a lower shell part in use according to some embodiments of the present disclosure. In some embodiments, as shown in FIG. 51 to FIG. 53, a connection seat 2023 is formed at one end of the lower shell part 202, and the connection seat 2023 extends from the left side surface of the lower shell part 202 to a right side surface thereof. An insertion hole 2024 is formed on the connection seat 2023, and the insertion hole 2024 communicates the optical port of the optical module and the inner cavity of the lower shell part 202. A front end of the optical fiber adapter is assembled and connected with the insertion hole 2024. Exemplarily, a plurality of insertion holes 2024 are formed on the connection seat 2023, for example, four insertion holes 2024 are formed in two rows on the connection seat 2023. The gasket 820 is located between the connection seat 2023 and the optical fiber-fixing frame 810; for example, the optical fiber-fixing frame 810 compresses and fixes the gasket 820 between the optical fiber-fixing frame 810 and the connection seat 2023.

In some embodiments, a first positioning recess 2025 is formed on a lower side plate 2022 at one side of the lower shell part 202, and the first positioning recess 2025 is formed by the inner side wall of the lower side plate 2022 being recessed towards an outer side of the lower side plate 2022. The first positioning recess 2025 is provided to assemble and connect with the other end of the first fixing arm 815. Exemplarily, the first positioning protrusion 8151 is assembled and connected to the first positioning recess 2025, or the first assembly portion 8153 is assembled and connected to the first positioning recess 2025.

In some embodiments, a second positioning recess 2026 is formed on a lower side plate 2022 on the other side of the lower shell part 202, and the second positioning recess 2026 is formed by an inner side wall of the lower side plate 2022 being recessed toward an outer side of the lower side plate 2022. The second positioning recess 2026 is configured to assemble and connect with the other end of the second fixing arm 816. Exemplarily, the second positioning protrusion 8161 is assembled and connected to the second positioning recess 2026, or the second assembly portion 8163 is assembled and connected to the second positioning recess 2026.

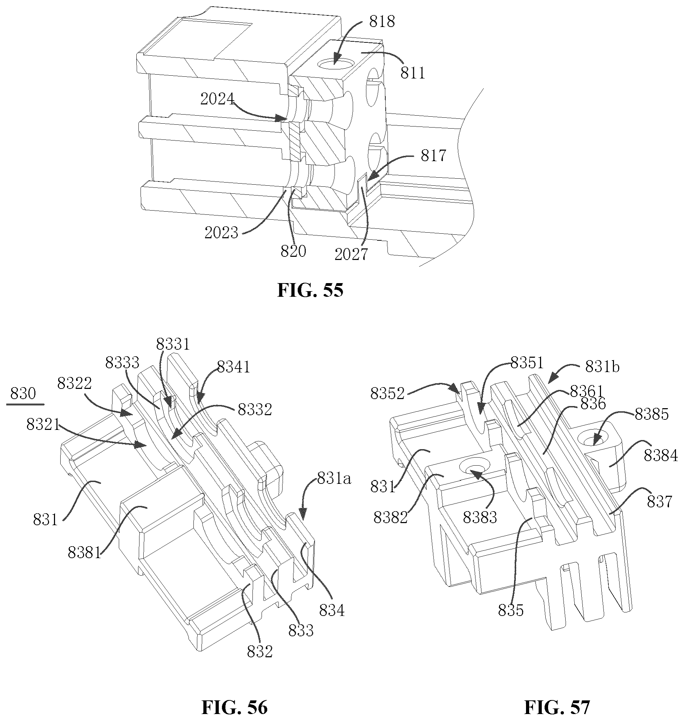

FIG. 54 is a schematic structural diagram of another optical fiber-fixing frame provided according to some embodiments of the present disclosure, and FIG. 55 is a schematic assembly diagram of another optical fiber-fixing frame provided according to some embodiments of the present disclosure. In some embodiments, as shown in FIG. 54 and FIG. 55, a assembly groove 817 is provided at a lower edge of the fixing plate 811, and the assembly groove 817 penetrates the fixing plate 811. Exemplarily, an extension direction of the assembly groove 817 is the same as an extension direction of the first assembly hole 812. A mounting column 2027 is provided on the lower shell part 202, and the mounting column 2027 is assembled and connected to the assembly groove 817. For example, the mounting column 2027 is provided on the bottom plate 2021. Of course, in some embodiments, the mounting column may be provided on the fixing plate 811, and the assembly groove may be provided on the bottom plate 2021.

In some embodiments, a fixing hole 818 is disposed on the fixing plate 811, and the fixing hole 818 is communicated to the assembly groove 817. A screw passes through the fixing hole 818 to fixedly connect the mounting column 2027, such that the optical fiber-fixing frame 810 is fixedly connected with the lower shell part 202.

In some embodiments, a fifth limiting boss 8116 is formed at an upper edge of the fixing plate 811, one end of the fifth limiting boss 8116 is connected to the first limiting boss 8112, and the other end of the fifth limiting boss 8116 is connected to the second limiting boss 8113. The fifth limiting boss 8116 limits and connects an upper side of the gasket 820.

In some embodiments, a sixth limiting boss 8117 is formed at a lower edge of the fixing plate 811, one end of the sixth limiting boss 8117 is connected to the first limiting boss 8112, and the other end of the sixth limiting boss 8117 is connected to the second limiting boss 8113. The assembly groove 817 passes through the sixth limiting boss 8117, and the sixth limiting boss 8117 limits and connects a lower side of the gasket 820.

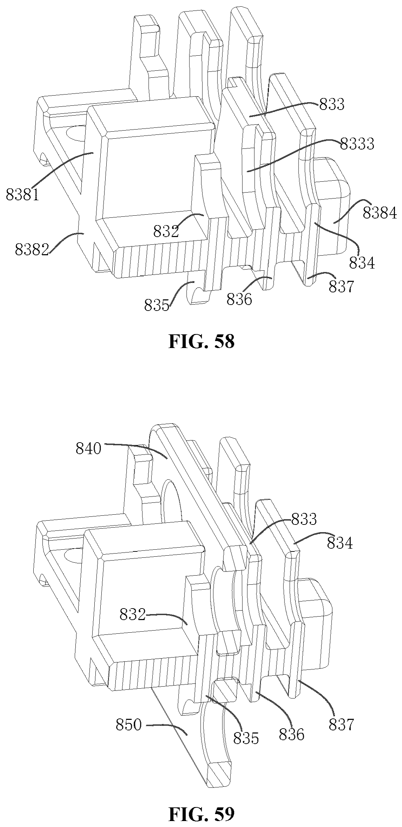

FIG. 56 is a first schematic structural diagram of another optical fiber-fixing component provided according to some embodiments of the present disclosure, FIG. 57 is a second schematic structural diagram of another optical fiber-fixing component provided according to some embodiments of the present disclosure, and FIG. 58 is a first sectional view of another optical fiber-fixing component provided according to some embodiments of the present disclosure. In some embodiments, as shown in FIG. 56 to FIG. 58, the optical fiber-fixing component 800 may include an optical fiber bracket 830. The optical fiber bracket 830 includes a bracket plate 831. A first support group 831a is provided on an upper side of an end of the bracket plate 831, and the first support group 831a is configured to assemble and connect an optical fiber adapter A second support group 831b is provided on a lower side of the end of the bracket plate 831, and the second support group 831b is configured to assemble and connect an optical fiber adapter.

In some embodiments, the first support group 831a includes a first support plate 832, a second support plate 833 and a third support plate 834, which are arranged in sequence on the upper side of the end of the bracket plate 831. There is a gap between the first support plate 832 and the second support plate 833, and there is a gap between the second support plate 833 and the third support plate 834. The first support plate 832, the second support plate 833 and the third support plate 834 are configured to assemble and connect with the optical fiber adapter to ensure assembly stability of the bracket plate 831 and the optical fiber adapter.

In some embodiments, tops of the first support plate 832, the second support plate 833 and the third support plate 834 may be flush.

In some embodiments, the second support group 831b includes a fourth support plate 835, a fifth support plate 836 and a sixth support plate 837, which are sequentially arranged side by side on the lower side of the end of the bracket plate 831. There is a gap between the fourth support plate 835 and the fifth support plate 836, and there is a gap between the fifth support plate 836 and the sixth support plate 837. The fourth support plate 835, the fifth support plate 836 and the sixth support plate 837 are configured to assemble and connect with the optical fiber adapter to ensure assembly stability of the bracket plate 831 and the optical fiber adapter.

In some embodiments, a height of the fourth support plate 835 is greater than a height of the fifth support plate 836, and tops of the fifth support plate 836 and the sixth support plate 837 may be flush.

In some embodiments, the first support plate 832 and the fourth support plate 835 are arranged back to back, the second support plate 833 and the fifth support plate 836 are arranged back to back, and the third support plate 834 and the sixth support plate 837 are arranged back to back. The first support plate 832, the second support plate 833 and the third support plate 834 are assembled and connected with the optical fiber adapter, the fourth support plate 835, the fifth support plate 836 and the sixth support plate 837 are assembled and connected with the optical fiber adapter. In this way, the optical fiber bracket 830 can fix the optical fiber adapters in layers.

In some embodiments, a first assembly port 8321 is formed on the first support plate 832, a second assembly port 8331 is formed on the second support plate 833, and a third assembly port 8341 is provided on the third support plate 834. The first assembly port 8321, the second assembly port 8331 and the third assembly port 8341 are arranged in a series to assemble and connect the optical fiber adapters. Exemplarily, multiple series of assembly ports, such as two series, may be formed on the first support plate 832, the second support plate 833 and the third support plate 834.

In some embodiments, a first limiting groove 8332 is formed on one side of the second assembly port 8331 close to the first assembly port 8321, and the first limiting groove 8332 is assembled and connected to the optical fiber adapter. For example, a first limiting surface 8333 is formed on a side surface of the first limiting groove 8332, and the first limiting surface 8333 is configured to limit and assemble the optical fiber adapter, so as to facilitate to assembly the optical fiber adapter in the first limiting groove 8332.

In some embodiments, a first notch 8322 is formed on the first support plate 832, and the first notch 8322 is located at a side of the first assembly port 8321. For instance, the first notch 8322 may be communicated to the first assembly port 8321.

In some embodiments, a fourth assembly port 8351 is formed on the fourth support plate 835, and a second limiting groove 8361 is formed on the fifth support plate 836. The fourth assembly port 8351 and the second limiting groove 8361 are arranged in series to assemble and connect the optical fiber adapter. Of course, in some embodiments of the present disclosure, multiple series of assembly ports may be formed on the fourth support plate 835, the fifth support plate 836 and the sixth support plate 837; and a limiting surface may be formed on the second limiting groove 8361.

In some embodiments, a second notch 8352 is formed on the fourth support plate 835, and the second notch 8352 is located at a side of the fourth support plate 835. The second notch 8352 may not be communicated to the fourth assembly port 8351.

In some embodiments, the optical fiber bracket 830 may include a first assembly column 8381, which is disposed on the upper side of the bracket plate 831 and located at a side of the first support plate 832. The first assembly column 8381 is configured to be assembled and connected to the shell of the optical module, and the first assembly column 8381 may also increase the strength of the optical fiber bracket 830. For example, the first assembly column 8381 extends from an edge of the bracket plate 831 to the first support plate 832, and a height of the first assembly column 8381 may be higher than a height of the first support plate 832. A left side of the first assembly column 8381 may be assembled and connected to the lower shell part 202, and a top side of the first assembly column 8381 may be assembled and connected to the upper shell part.

In some embodiments, the optical fiber bracket 830 may include a second assembly column 8382, which is disposed on the lower side of the bracket plate 831 and at a side of the fourth support plate 835. The second assembly column 8382 is configured to assemble and connect the lower shell part 202, and the second assembly column 8382 can also increase the strength of the optical fiber bracket 830. Exemplarily, the second assembly column 8382 extends from an edge of the bracket plate 831 to the fourth support plate 835, and a height of the second assembly column 8382 may be lower than a height of the fourth support plate 835.

In some embodiments, a first positioning hole 8383 is provided on the second assembly column 8382, and the first positioning hole 8383 is provided for positioning and connecting the lower shell part 202.

In some embodiments, the optical fiber bracket 830 may include a third assembly column 8384, and the third assembly column 8384 is located at a side of the sixth support plate 837. Exemplarily, a top of the third assembly column 8384 extends to a side of the third support plate 834.

In some embodiments, a second positioning hole 8385 is provided on the third assembly column 8384, and the second positioning hole 8385 is used for positioning and connecting the lower shell part 202.

In some embodiments, the configuration of the first support group 830a may be the same as that of the second support group 830b provided in the above embodiments; or, the configuration of the second support group 830b may be the same as that of the first support group 830a provided in the above embodiments.

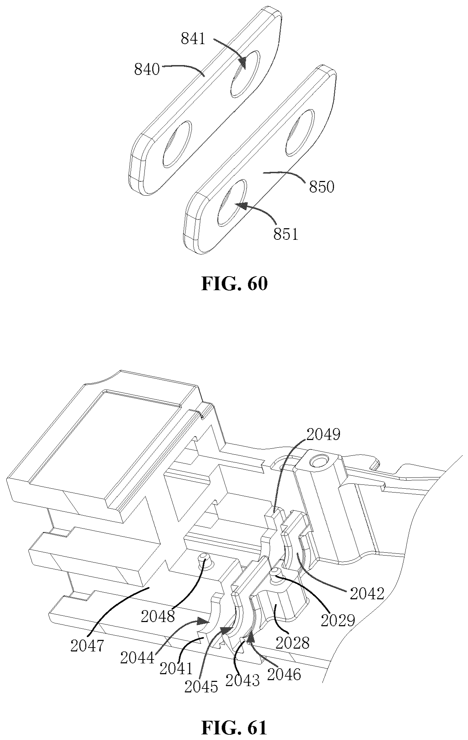

FIG. 59 is a second sectional view of another optical fiber-fixing component provided according to some embodiments of the present disclosure, and FIG. 60 is a partial schematic view of another optical fiber-fixing component provided according to some embodiments of the present disclosure. In some embodiments, as shown in FIG. 59 and FIG. 60, the optical fiber-fixing component 800 may include a first gasket 840, and the first gasket 840 is embedded in the gap between the first support plate 832 and the second support plate 833. Exemplarily, a bottom of the first gasket 840 is embedded in the gap between the first support plate 832 and the second support plate 833. The first gasket 840 is provided therein with a first fitting hole 841, so as to connect the optical fiber adapter through the first fitting hole 841.

In some embodiments, the first gasket 840 is a strip-shaped gasket, and a plurality of first fitting holes 841, such as two first fitting holes 841, are provided in the first gasket 840 along the length direction of the first gasket 840. The first gasket 840 may be a shielding gasket, and the first gasket 840 is connected with the first support plate 832 and the second support plate 833 in an interference fit manner. The first gasket 840 can not only shield electromagnetic radiation, but also strengthen the assembling of the optical fiber adapter, and reduce movement of the optical fiber adapter caused by plugging and unplugging an external optical fiber.

In some embodiments, the optical fiber-fixing component 800 may include a second gasket 850, and the second gasket 850 is embedded in the gap between the fourth support plate 835 and the fifth support plate 836. Exemplarily, a top of the second gasket 850 is embedded in the gap between the fourth support plate 835 and the fifth support plate 836. The second gasket 850 is provided therein with a second fitting hole 851, so as to connect the optical fiber adapter through the second fitting hole 851.

In some embodiments, the second gasket 850 is a strip-shaped gasket, and a plurality of second fitting holes 851, such as two second fitting holes 851, are provided on the second gasket 850 along the length direction of the second gasket 850. The second gasket 850 can be a shielding gasket, and the second gasket 850 is connected with the fourth support plate 835 and the fifth support plate 836 in an interference fit manner. The second gasket 850 can not only shield electromagnetic radiation, but also strengthen the assembling of the optical fiber adapter, and reduce movement of the optical fiber adapter caused by plugging and unplugging an external optical fiber.

FIG. 61 is a partial schematic diagram of another lower shell part provided according to some embodiments of the present disclosure. As shown in FIG. 61, the optical port of the lower shell part 202 is provided with a seventh support plate 2041, an eighth support plate 2042 and a ninth support plate 2043 side by side, with a gap being formed between the seventh support plate 2041 and the eighth support plate 2042, and a gap being formed between the eighth support plate 2042 and the ninth support plate 2043. The seventh support plate 2041, the eighth support plate 2042 and the ninth support plate 2043 are provided to assemble and connecte with an optical fiber adapter.

In some embodiments, the seventh support plate 2041 is provided with a seventh assembly port 2044, the eighth support plate 2042 is provided with an eighth assembly port 2045, and the ninth support plate 2043 is provided with a ninth assembly port 2046. The seventh assembly port 2044, the eighth assembly port 2045 and the ninth assembly port 2046 are arranged in a series to assemble and connect the optical fiber adapter. Exemplarily, multiple series of assembly ports, such as two series, may be formed on the seventh support plate 2041, the eighth support plate 2042 and the ninth support plate 2043.

In some embodiments, a partition plate 2047 may be disposed in the optical port of the lower shell part 202, and an end of the partition plate 2047 is connected to the seventh support plate 2041, and a top side of the end of the partition plate 2047 supports and connects to the second assembly column 8382. A first positioning column 2048 is disposed on the partition plate 2047, and the first positioning column 2048 is assembled and connected to the first positioning hole 8383.

In some embodiments, a first assembly plate 2049 is formed at an edge of the seventh support plate 2041, and the first assembly plate 2049 is assembled and connected to the second notch 8352.

In some embodiments, a support platform 2028 is formed on a top of the bottom plate 2021. A second positioning column 2029 is disposed on the support platform 2028. The support platform 2028 supports and connects the third assembly column 8384, and the second positioning column 2029 is assembled and connected to the second positioning hole 8385.

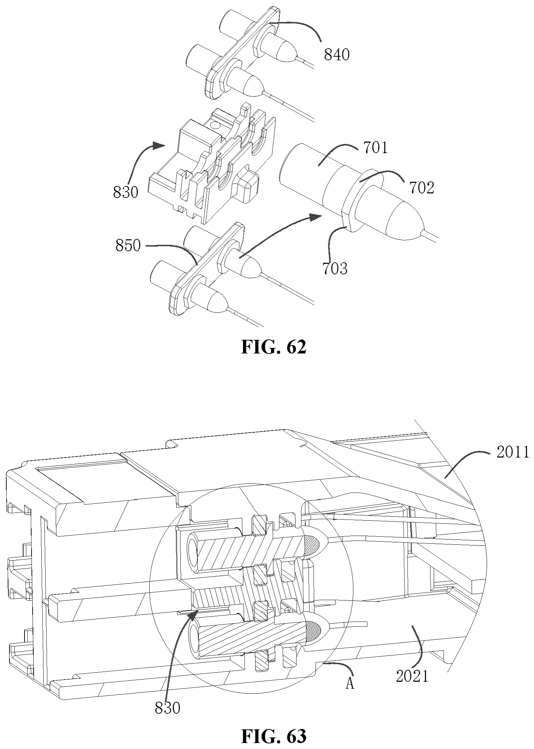

FIG. 62 is an exploded schematic diagram of a partial structure of an optical module provided according to some embodiments of the present disclosure. As shown in FIG. 62, the optical fiber adapter includes an adapter body 701, and a protrusion 702 is provided on the adapter body 701. The protrusion 702 is formed by a partial side surface of the adapter body 701 protruding outwards. A second limiting surface 703 is provided on the protrusion 702, and the second limiting surface 703 is used for assemble and connect with the first limiting surface 8333, etc.

The first gasket 840 is sleeved on two optical fiber adapters, and the second gasket 850 is sleeved on two optical fiber adapters. A side surface of the first gasket 840 and a side surface of the second gasket 850 are respectively in contact with and connected to a side surface of the protrusion 702 on the corresponding optical fiber adapter.

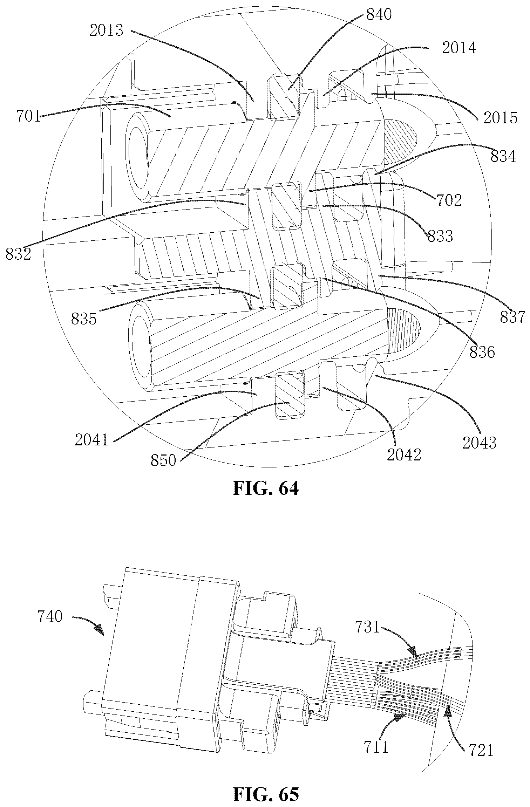

FIG. 63 is a sectional view of an optical module provided according to some embodiments of the present disclosure, and FIG. 64 is a partial enlarged view of the portion indicated with the A in FIG. 63. In some embodiments, as shown in FIG. 63 and FIG. 64, a first extrusion plate 2013, a second extrusion plate 2014 and a third extrusion plate 2015 are arranged side by side in the optical port of the upper cover plate 2011. There is a gap between the first extrusion plate 2013 and the second extrusion plate 2014, and there is a gap between the second extrusion plate 2014 and the third extrusion plate 2015. The first extrusion plate 2013, the second extrusion plate 2014 and the third extrusion plate 2015 are provided to assemble and connect with an optical fiber adapter.

In some embodiments, multiple series of assembly ports may be formed on the first extrusion plate 2013, the second extrusion plate 2014 and the third extrusion plate 2015, so as to assemble and connect the optical fiber adapters. The structures of the assembly ports on the first extrusion plate 2013 and the like may refer to those of the assembly ports on the seventh support plate 2041, and the like.

The first gasket 840 and the second gasket 850, which are assembled and connected with the optical fiber adapters, are respectively assembled and connected with the optical fiber bracket 830; the optical fiber bracket 830 is assembled and connected with the lower shell part 202; the upper shell part 201 is covered; and the upper shell part 201 and the lower shell part 202 are fixedly connected. The first gasket 840, the second gasket 850, the optical fiber bracket 830, etc. mutually squeeze the optical fiber adapters to fix these optical fiber adapters to the optical port of the optical module. The optical fiber adapters are firmly fixed, and thus it is not easy for the optical fiber adapters to be loosened when plugging and unplugging the external optical fibers. The first gasket 840, the second gasket 850, the optical fiber bracket 830, etc. mutually squeeze to fixedly hold the optical fiber bracket 830 in the optical port of the optical module, such that the optical fiber bracket 830 can be easily assembled, which in turn makes it easy to fix and assemble the optical fiber adapter.

FIG. 65 is a partial schematic structural diagram of another optical module provided according to some embodiments of the present disclosure. In some embodiments, as shown in FIG. 65, the optical transmission assembly 700 may include a fifth optical fiber adapter 740. The fifth optical fiber adapter 740 is connected to the first optical fiber 711, the second optical fiber 721 and the third optical fiber 731, so as to couple and connect external optical fibers and the first optical fiber 711, and the like, through the fifth optical fiber adapter 740. Exemplarily, ends of the first optical fiber 711, the second optical fiber 721 and the third optical fiber 731 are connected to the fifth optical fiber adapter 740 in parallel, that is, a width direction of the fifth optical fiber adapter 740 is arranged along the width direction of the optical module.

In some embodiments, the fifth optical fiber adapter 740 is disposed laterally at the optical port of the optical module.

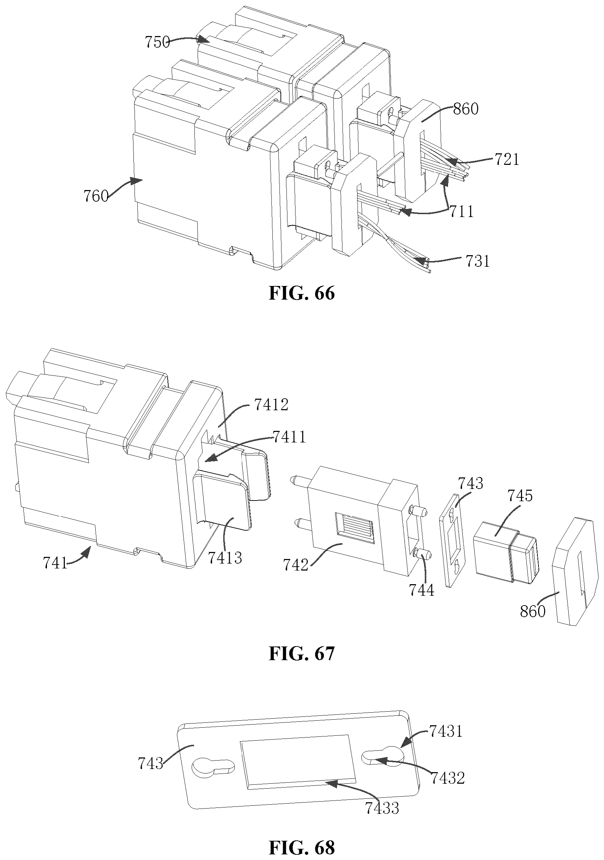

FIG. 66 is a second partial structural schematic diagram of another optical module provided according to some embodiments of the present disclosure. In some embodiments, as shown in FIG. 66, the optical transmission assembly 700 may include a sixth optical fiber adapter 750 and a seventh optical fiber adapter 760. The sixth optical fiber adapter 750 connects a portion of the optical fibers of the first optical fiber 711 and the second optical fiber 721, so as to couple and connect external optical fiber(s) and the second optical fiber 721 through the sixth optical fiber adapter 750. The seventh optical fiber adapter 760 connects a portion of the optical fibers of the first optical fiber 711 and the third optical fiber 731, so as to couple and connect external optical fiber(s) and the third optical fiber 731 through the seventh optical fiber adapter 760.

In some embodiments, the sixth optical fiber adapter 750 and the seventh optical fiber adapter 760 are arranged side by side at the optical port of the optical module. For example, the sixth optical fiber adapter 750 and the seventh optical fiber adapter 760 are arranged vertically at the optical port of the optical module, that is, a width direction of the sixth optical fiber adapter 750 and that of the seventh optical fiber adapter 760 are arranged along a height direction of the optical module.

In some embodiments, the optical fiber-fixing component 800 may include a third gasket 860, which is sleeved on a tail end of the fifth optical fiber adapter 740, the sixth optical fiber adapter 750 or the seventh optical fiber adapter 760 and fixedly connected to the shell of the optical module. The third gasket 860 may be a shielding gasket to shield electromagnetic radiation.

In some embodiments, the upper shell part 201 and the lower shell part 202 are each provided with a corresponding gasket-assembling groove. When the upper shell part 201 covers the lower shell part 202, the corresponding gasket-assembling groove forms a gasket-accommodating cavity, and the third gasket 860 is assembled and connected to the gasket-accommodating cavity. Exemplarily, the third gasket 860 is connected to the gasket-assembling groove in an interference fit manner, so as to achieve electromagnetic shielding of the optical port of the optical module. The third gasket 860 is made of a conductive rubber, which is connected to the upper shell part 201 and the lower shell part 202 in a sealing manner.

FIG. 67 is an exploded schematic diagram of a fifth optical fiber adapter provided according to some embodiments of the present disclosure. In some embodiments, the fifth optical fiber adapter 740 includes a clamping claw 741 and an optical fiber plug 742. The clamping claw 741 is formed therein with a through hole. The optical fiber plug 742 is inserted into one end of the through hole, and an optical fiber end of the first optical fiber 711, and the like, is inserted into the optical fiber plug 742. The external optical fiber is inserted into the other end of the through hole. Thus, the external optical fiber is optically coupled to the first optical fiber 711, and the like.

In some embodiments, the fifth optical fiber adapter 740 may include an optical fiber connector 745. The optical fiber ribbon in the optical module is inserted into the optical fiber connector 745, and the optical fiber connector 745 is inserted into the optical fiber plug 742, so as to achieve coupling connection between the optical fiber ribbon and the optical fiber plug 742 through the optical fiber connector 745.

In some embodiments, the fifth optical fiber adapter 740 may include a fixing member 743 and a pin 744. One end of the fixing member 743 contacts an end surface of the optical fiber plug 742, and the other end of the fixing member 743 is connected and fixed with the clamping claw 741, such that the optical fiber plug 742 is fixedly connected in the clamping claw 741 through the fixing member 743. In this way, the fixing member 743 and the pin 744 facilitate the insertion of the optical fiber plug 742 into the clamping claw 741 and the positioning and connection of the external optical fiber and the optical fiber plug 742.

In some embodiments, a second elastic snap fitting member 7413 is provided at one end of the clamping claw 741 facing the circuit board 300. The second elastic snap fitting member 7413 extends from a right side 7412 of the clamping claw 741 towards the circuit board 300, and the second elastic snap fitting member 7413 is fixedly connected to the right side 7412. The through hole 7411 passes through the right side 7412, such that the optical fiber plug 742 can be inserted into the clamping claw 741 through the through hole 7411, and the optical fiber plug 742 is limited in a left-right direction through the right side 7412.

In some embodiments, the second elastic snap fitting member 7413 is rotatable within a preset angle range such that the second elastic snap fitting member 743 can be pushed inward to fix the optical fiber plug 742 and can also be bent outward to remove the optical fiber plug 742.

In some embodiments, the optical fiber plug 742 includes a ferrule and a fixing portion. An outer wall of the fixing portion protrudes relative to an outer wall of the ferrule. When the optical fiber plug 742 is inserted into the through hole 7411 of the clamping claw 741, the ferrule is inserted into the through hole 7411, and the right side surface 7412 of the clamping claw 741 abuts against a connecting surface of the fixing portion and the ferrule to limit the optical fiber plug 742 such that the fixing portion is located outside the through hole 7411.

A right side surface of the fixing portion is in contact with a left side surface of the fixing member 743. That is, the ferrule of the optical fiber plug 742 is inserted into the clamping claw 741, and the fixing member 743 is abutted against the right side surface of the fixing portion. A right end surface of the fixing member 743 is pressed against by the second elastic snap fitting member 7413 to apply a force to the fixing member 743 and the optical fiber plug 742, such that the optical fiber plug 742 and the fixing member 743 are fixedly connected in the clamping claw 741.

FIG. 68 is a schematic structural diagram of a fixing member provided according to some embodiments of the present disclosure. In some embodiments, as shown in FIG. 68, an avoidance hole 7433 is formed on the fixing member 743. The optical fiber connector 745 passes through the avoidance hole 7433 and is inserted into the optical fiber plug 742 to achieve the connection between the optical fiber ribbon and the optical fiber plug 742.

In some embodiments, a pinhole is formed in the optical fiber plug 742, and the pinhole passes through left and right sides of the optical fiber plug 742. A plurality of insertion holes are formed in the fixing member 743, and each insertion hole includes a first insertion hole 7431 and a second insertion hole 7432 which are communicated with each other. A diameter of the first insertion hole 7431 is larger than a diameter of the second insertion hole 7432.

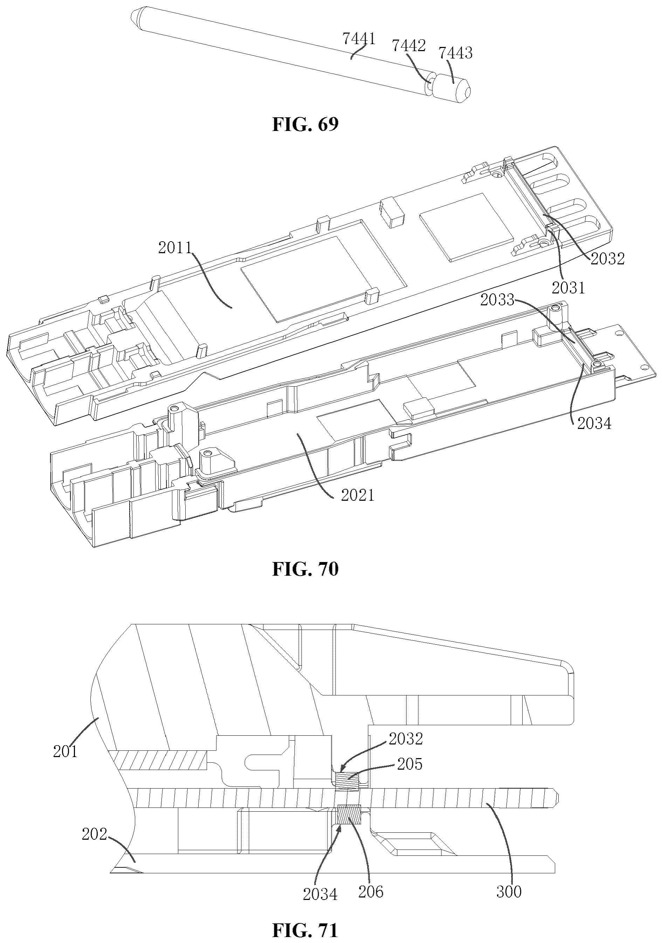

FIG. 69 is a schematic structural diagram of a pin provided according to some embodiments of the present disclosure. In some embodiments, as shown in FIG. 69, the pin 744 includes an inserting portion 7441, a connecting portion 7442 and an exposed portion 7443, wherein the exposed portion 7443 is connected to the inserting portion 7441 through the connecting portion 7442, and a diameter of the exposed portion 7443 is greater than or equal to a diameter of the inserting portion 7441, and the diameter of the inserting portion 7441 is greater than a diameter of the connecting portion 7442.

The diameter of the first insertion hole 7301 is greater than or equal to the diameter of the insertion portion 7441, the diameter of the second insertion hole 7432 is smaller than the diameter of the insertion portion 7441, and the diameter of the second insertion hole 7432 is greater than or equal to the diameter of the connection portion 7442.

In some embodiments, in order to facilitate the taking of the pin 744, the diameter of the exposed portion 7443 may be larger than the diameter of the first insertion hole 7431. In this way, when the pin 744 is inserted into the pinhole of the optical fiber plug 742 through the first insertion hole 7431, the exposed portion 7443 is exposed outside the fixing member 743, and the insertion portion 7441 is inserted into the pinhole through the first insertion hole 7431, and the pin 744 is movable left and right in the pinhole and the first insertion hole 7431; then the fixing member 743 is moved to clamp the connecting portion 7442 into the second insertion hole 7432, and at this time, the pin 744 cannot move left and right in the second insertion hole 7432, and thus the pin 744 is clamped in the fixing member 743.

In some embodiments, the optical fiber plug 742 may be a MT male plug, and a plug of the external optical fiber is a corresponding MT female plug. That is, after the pin 744 is fixed in the optical fiber plug 742, one end of the pin 744 facing away from the exposed portion 7443 protrudes from the optical fiber plug 742, such that when the external optical fiber is inserted into the clamping claw 741, the protruded pin 744 is inserted into an insertion hole of the external optical fiber to achieve the positioning and connection between the optical fiber plug 742 and the external optical fiber.

In some embodiments, the structures of the sixth optical fiber adapter 750 and the seventh optical fiber adapter 760 are the same as or similar to the fifth optical fiber adapter 740. Thus, regarding the structures of the sixth optical fiber adapter 750 and the seventh optical fiber adapter 760, reference may be made to the structure of the fifth optical fiber adapter 740 disclosed in the above embodiments .

FIG. 70 is an exploded schematic diagram of an upper shell part and a lower shell part provided according to some embodiments of the present disclosure. In some embodiments, as shown in FIG. 70, the electrical port end of the upper shell part 201 is provided with a first connection boss 2031 extending from the inner side of the upper cover plate 2011 towards the circuit board 300. A first connection groove 2032 is formed on the first connection boss 2031, and an opening is formed on a left side of the first connection groove 2032. The electrical port end of the lower shell part 202 is provided with a second connection boss 2033, and the second connection boss 2033 extends from the inner side of the bottom plate 2021 towards the circuit board 300. A second connection groove 2034 is formed on the second connection boss 2033, and an opening is formed on a left side of the second connection groove 2034.

In some embodiments, a plurality of assembly grooves are correspondingly formed at the optical port end of the upper shell part 201 and the optical port end of the lower shell part 202, so as to fix the fifth optical fiber adapter 740 and the like at the optical port of the optical module through the assembly grooves.

FIG. 71 is a partial sectional view of an optical module provided according to some embodiments of the present disclosure. As shown in FIG. 71, a first shielding strip 205 is provided on the front surface of the circuit board 300 along the width direction of the circuit board 300. The first shielding strip 205 is located between the gold finger 301 and the optical emission component 400. A second shielding strip 206 is provided on the back surface of the circuit board 300 along the width direction of the circuit board 300, and the second shielding strip 206 is located between the gold finger 301 and the optical reception component.

When the circuit board 300 is installed in the lower shell part 202, the second shielding strip 206 is embedded in the second connection groove 2034, such that the lower shell part 202 and the circuit board 300 are sealingly assembled at the electrical port through the second shielding strip 206. When the upper shell part 201 is covered on the lower shell part 202, the first shielding strip 205 is embedded in the first connection groove 2032, such that the upper shell part 201 and the circuit board 300 are sealingly assembled at the electrical port through the first shielding strip 205. The first shielding strip 205 and the second shielding strip 206 on the circuit board 300 improve the EMI shielding effect at the electrical port of the optical module, but electromagnetic waves inside the optical module can escape through the optical port of the optical module, which affects the EMI shielding effect of the optical module.

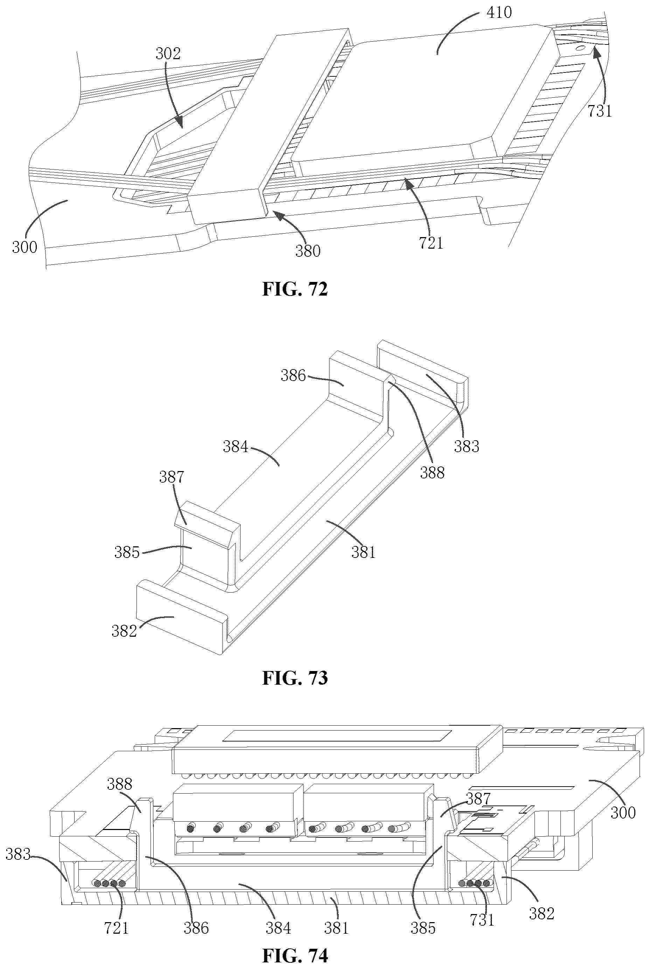

FIG. 72 is a partial schematic diagram of another optical module provided according to some embodiments of the present disclosure. In some embodiments, as shown in FIG. 72, a wire-restraining member 380 is disposed in the optical module 200, and the wire-restraining member 380 is configured to harness the second optical fiber 721 and the third optical fiber 731.

In some embodiments, the wire-restraining member 380 is connected to the circuit board 300, and the wire-restraining member 380 binds the second optical fiber 721 to one side of the emission base 410 and binds the third optical fiber 731 to the other side of the emission base 410.

FIG. 73 is a schematic structural diagram of a wire-restraining member provided according to some embodiments of the present disclosure, and FIG. 74 is a schematic diagram showing an assembling state of a wire-restraining member and a circuit board provided according to some embodiments of the present disclosure. In some embodiments, as shown in FIG. 73 and FIG. 74, the wire-restraining member 380 includes a bridging plate 381, a first support arm 382, and a second support arm 383. Two ends of the bridging plate 381 are respectively connected to the first support arm 382 and the second support arm 383; the bridging plate 381 is located below the circuit board 300; and top surfaces of the first support arm 382 and the second support arm 383 are bonded to the back surface of the circuit board 300 to fix the wire-restraining member 380 on the back surface of the circuit board 300.

In some embodiments, a support plate 384 is formed on the bridging plate 381, and the support plate 384 extends from a top surface of the bridging plate 381 towards the circuit board 300. The support plate 384 is located between the first support arm 382 and the second support arm 383. A first limiting arm 385 and a second limiting arm 386 are formed on the support plate 384, and two ends of the support plate 384 are respectively connected to the first limiting arm 385 and the second limiting arm 386. The first limiting arm 385 and the second limiting arm 386 extend from the support plate 384 towards the upper shell part 201, and a distance between the first limiting arm 385 and the second limiting arm 386 is smaller than a distance between the first support arm 382 and the second support arm 383, such that there is a gap between the first limiting arm 385 and the first support arm 382, and there is a gap between the second limiting arm 386 and the second support arm 383. The support plate 384 can reinforce the connection between the first limiting arm 385 and the second limiting arm 386 and the bridging plate 381, respectively. The support plate 384 can also limit and support the first optical fiber 711 to reduce a bending angle of the first optical fiber 711, thereby effectively avoiding damage to the first optical fiber 711 caused by excessive bending.

The support plate 384, the first limiting arm 385 and the second limiting arm 386 are embedded in the mounting hole 302, and the optical fiber connected to the optical emission component 400 is placed on the support plate 384. The optical fiber is supported by the support plate 384.

The first limiting arm 385 abuts against a front side wall of the mounting hole 302, and the second limiting arm 386 abuts against a rear side wall of the mounting hole 302. The first limiting arm 385 and the second limiting arm 386 limit and restrain the second optical fiber 721 and the third optical fiber 731. The first limiting arm 385 and the second limiting arm 386 limit the second optical fiber 721 and the third optical fiber 731 in the front-back direction and left-right direction so as to protect the second optical fiber 721 and the third optical fiber 731 and reduce the risk of the second optical fiber 721 and the third optical fiber 731 being bent or squeezed.

In some embodiments, a first hook 387 is formed on a top surface of the first limiting arm 385, and the first hook 387 protrudes toward the first support arm 382; a second hook 388 is formed on a top surface of the second limiting arm 386, and the second hook 388 protrudes toward the second support arm 383. When the wire-restraining member 380 is inserted into the mounting hole 302 down-up, the first hook 387 and the second hook 388 are engaged on the front surface of the circuit board 300 to limit the wire-restraining member 380 in an up-down direction.

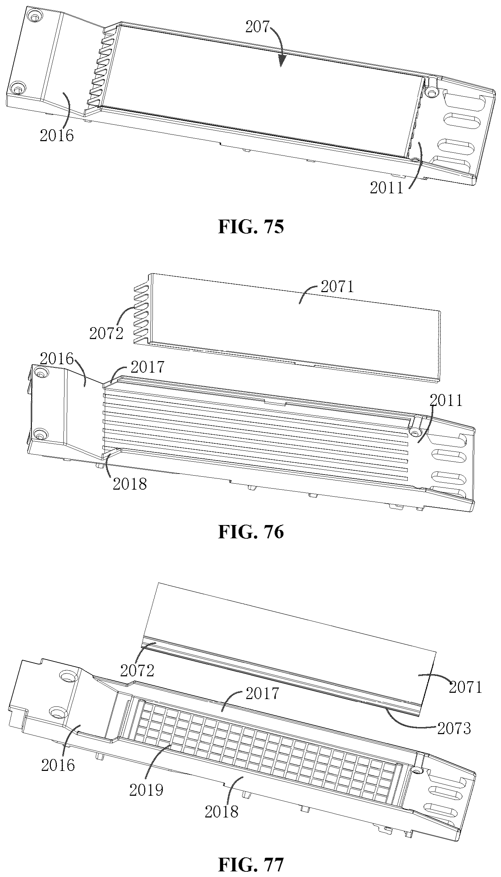

FIG. 75 is a schematic structural diagram of an upper shell part provided according to some embodiments of the present disclosure, and FIG. 76 is an exploded schematic diagram of an upper shell part provided according to some embodiments of the present disclosure. In some embodiments, as shown in FIG. 75 and FIG. 76, a heat dissipation component 207 is provided on a top of the upper shell part 201. The heat dissipation component 207 is provided to increase the heat dissipation area of the upper cover plate 2011.

In some embodiments, the heat dissipation component 207 includes a heat dissipation fin 2072 and a heat dissipation cover plate 2071. The heat dissipation fin 2072 is connected to the heat dissipation cover plate 2071, and a bottom of the heat dissipation fin 2072 is welded to the top of the upper shell part 201. The heat dissipation fin 2072 is a long, ridge-shaped protrusion formed on the bottom surface of the heat dissipation cover plate 2071. Exemplarily, the heat dissipation component 207 includes a plurality of heat dissipation fins 2072. The heat dissipation fins 2072 extend along the length direction of the upper shell part 201, and form a plurality of heat dissipation channels with the heat dissipation cover plate 2071, and both ends of the heat dissipation channel are open to allow air to flow in and out of the heat dissipation channel.

In some embodiments, the heat dissipation fins 2072 and the heat dissipation cover plate 2071 can be integrally formed, and the heat dissipation fins 2072 and the upper shell part 201 are not integrally formed, such that the heat dissipation component 207 has a good effect of improving the heat dissipation effect of the upper shell part 201, and can also facilitate the production of the heat dissipation component 207 and ensure that the top of the optical module is flat. The bottom of the heat dissipation fin 2072 is connected to the top of the upper shell part 201, and the heat dissipation cover plate 2071 is disposed on the top of the heat dissipation fins 2072, such that the top of the upper shell part 201 is provided with heat dissipation fins, which can not only increase the heat dissipation area of the top of the upper shell part 201, but also form a heat dissipation channel capable of defining flow direction of air flow, such that the upper shell part 201 has a higher heat dissipation efficiency. Of course, in some embodiments of the present disclosure, the heat dissipation fins 2072 may be integrally formed with the upper shell part 201.

In some embodiments, the heat dissipation fins 2072 are straight fins, and the heat dissipation fins 2072 extend from one end of the heat dissipation cover plate 2071 to the other end of the heat dissipation cover plate 2071. Exemplarily, a length of the heat dissipation cover plate 2071 is greater than half of a total length of the upper shell part 201. Of course, in some embodiments of the present disclosure, the length of the heat dissipation cover plate 2071 is less than or equal to half of the total length of the upper shell part 201.

In some embodiments, a first limiting plate 2017 is disposed on one side of the top of the upper shell part 201, and the first limiting plate 2017 limits and connects to the heat dissipation component 207. Exemplarily, the first limiting plate 2017 limits and connects to one side of the heat dissipation cover plate 2071.

In some embodiments, a second limiting plate 2018 is disposed on the other side of the top of the upper shell part 201, and the second limiting plate 2018 limits and connects to the heat dissipation component 207. For example, the second limiting plate 2018 limits and connects to the other side of the heat dissipation cover plate 2071.

In some embodiments, the upper shell part 201 may include an inclined plate 2016, which is located at the optical port end of the upper shell part 201, and the inclined plate 2016 is connected to the upper cover plate 2011. The inclined plate 2016 is inclined toward the lower shell part 202, such that a height of one end of the inclined plate 2016 is higher than a height of the other end of the inclined plate 2016. The inclined plate 2016 can adjust a height of the optical port end of the upper shell part 201, and can also guide air such that the air flow flows to the heat dissipation component 207 more efficiently.

In some embodiments, the other end of the inclined plate 2016 extends to channel openings of the heat dissipation channels on the heat dissipation component 207, and the top surface of the inclined plate 2016 is inclined to allow air flow to flow into the heat dissipation channel of the heat dissipation component 207 more effectively.

In some embodiments, a bottom of one end of the first limiting plate 2017 is connected to one side of the inclined plate 2016, and a bottom of one end of the second limiting plate 2018 is connected to the other side of the inclined plate 2016. Therefore, the first limiting plate 2017 and the second limiting plate 2018 can form a guide channel at the inclined plate 2016 to guide the air flow such that the air flow flows along the top surface of the inclined plate 2016 to the heat dissipation channels of the heat dissipation component 207.

FIG. 77 is an exploded schematic diagram of another upper shell part provided according to some embodiments of the present disclosure. In some embodiments, as shown in FIG. 77, the heat dissipation component 207 may include a heat dissipation base plate 2073, and the heat dissipation base plate 2073 is connected to the heat dissipation fins 2072.

In some embodiments, a welding protrusion 2019 is disposed on the top of the upper cover plate 2011, and the welding protrusion 2019 is welded to the heat dissipation base plate 2073. For instance, the welding protrusion 2019 has a grid-shaped pattern.

Finally, it should be noted that the above embodiments are only used to illustrate the technical solutions of the present disclosure, rather than to limit them. Although the present disclosure has been described in detail with reference to the aforementioned embodiments, those skilled in the art should understand that they can still modify the technical solutions described in the aforementioned embodiments, or make equivalent replacements for some of the technical features therein. However, these modifications or equivalents do not deviate the essence of the corresponding technical solutions from the spirit and scope of the technical solutions of the embodiments of the present disclosure.

## Claims

1. An optical module, comprising:
a circuit board, the circuit board being formed thereon with a mounting hole;
an optical emission component embedded into the mounting hole, and the optical emission component comprising:
an emission base embedded and connected in the mounting hole;
a light emitting assembly disposed on the emission base, the light emitting assembly being connected to a surface of the circuit board through wire bonding and configured to generate 2N paths of optical signals, wherein N≥1;
a collimating lens group disposed on the emission base and located in an output optical path of the light emitting assembly;
a first optical reception component disposed on the circuit board and configured to receive N paths of optical signals, and the first optical reception component is connected to a surface of the circuit board;
a second optical reception component disposed on the circuit board and configured to receive N paths of optical signals, and the first optical reception component is connected to a surface of the circuit board; and
an optical transmission assembly comprising a second optical fiber and a third optical fiber, wherein the second optical fiber is connected to the first optical reception component and passes by a side of the emission base, and the third optical fiber is connected to the second optical reception component, and the second optical fiber passes by a side of the emission base.

2. The optical module according to claim 1, wherein a top of the emission base is formed with a first mounting surface, a first baffle plate and a second baffle plate are formed on the first mounting surface, and a second mounting surface is formed between the first baffle plate and the second baffle plate;
the first mounting surface is connected to a back surface of the circuit board; the first baffle plate and the second baffle plate are limited by and connected to the mounting hole; a combiner group or a third optical fiber-fixing head is disposed on the second mounting surface, and the first baffle plate or the second baffle plate limits and connects the combiner group or the third optical fiber-fixing head;
the optical emission component further comprises an emission cover plate, wherein a bottom of the cover plate is connected to a front surface of the circuit board, and the first baffle plate and the second baffle plate limit and connect to the emission cover plate.

3. The optical module according to claim 1, wherein the optical emission component comprises a third optical fiber connecting head, the optical transmission assembly further comprises a first optical fiber, and the third optical fiber connecting head is fixedly connected to an end of the first optical fiber;
a second mounting surface is formed on the emission base, and a plurality of second support platforms are disposed on the second mounting surface, wherein there is a gap between adjacent second support platforms, and the second support platforms support and connect a bottom of the third optical fiber connecting head;
a first support platform is provided on the second mounting surface, and a first limiting post and a second limiting post are disposed at an edge of the first support platform, wherein the first limiting post and the second limiting post limit and connect to a light output end of the third optical fiber connecting head.

4. The optical module according to claim 2, wherein the combiner group comprises a first combiner and a second combiner arranged side by side on the the second mounting surface;
the optical transmission assembly further comprises a first optical fiber, the optical emission component further comprises a first optical fiber-fixing head and a second optical fiber-fixing head which are respectively connected to the first optical fiber;
one end of the first mounting surface is formed with a mounting platform; a third mounting surface is arranged at edges of the mounting platform, and the first optical fiber-fixing head and the second optical fiber-fixing head are fixedly connected on the third mounting surface, the first optical fiber-fixing head being limited and connected to one side of the mounting platform, and the second optical fiber-fixing head being limited and connected to the other side of the mounting platform; or
the mounting platform is formed thereon with a first through hole and a second through hole, wherein the first optical fiber-fixing head is inserted into the first through hole, and the second optical fiber-fixing head is inserted into the second through hole; the first optical fiber-fixing head is located in an output optical path of the first combiner, and the second optical fiber-fixing head is located in an output optical path of the second combiner.

5. The optical module according to claim 3, wherein the optical emission component further comprises an isolator group, and the isolator group comprises a first isolator bracket, a second isolator bracket and a plurality of isolators, wherein the first isolator bracket supports and connects multiple isolators, and the second isolator bracket supports and connects multiple isolators;
the first support platform supports and connects the first isolator bracket and the second isolator bracket, the first limiting post limits and connects the first isolator bracket, and the second limiting post limits and connects the second isolator bracket.

6. The optical module according to claim 1, further comprising a wire-restraining member, wherein the wire-restraining member comprises a bridging plate, a first support arm, a second support arm, a first limiting arm and a second limiting arm;
one end of the first support arm is connected to one end of the bridging plate, one end of the second support arm is connected to the other end of the bridging plate, and the other end of the first support arm and the other end of the second support arm are connected to the circuit board;
the first limiting arm and the second limiting arm are located between the first support arm and the second support arm, and the first limiting arm and the second limiting arm are embeded into the mounting hole;
the second optical fiber passes through a gap between the first limiting arm and the first support arm, and the third optical fiber passes through a gap between the second limiting arm and the second support arm.

7. The optical module according to claim 1, wherein the first optical reception component comprises a reception fixing head and a detector group, wherein the detector group is arranged on the circuit board, and the reception fixing head is connected to the circuit board;
the reception fixing head comprises an optical fiber-supporting portion and an optical fiber-fixing portion; an end of the second optical fiber extends from one end of the optical fiber-supporting portion to the other end of the optical fiber-supporting portion; and the optical fiber-fixing portion covers and connects the optical fiber-supporting portion to fix and connect the second optical fiber through the optical fiber-supporting portion and the optical fiber-fixing portion.

8. The optical module according to claim 3, further comprising an upper shell part, a lower shell part and an optical fiber-fixing component, the optical transmission assembly further comprising a first optical fiber adapter, a second optical fiber adapter, a third optical fiber adapter and a fourth optical fiber adapter, wherein the first optical fiber adapter and the second optical fiber adapter are respectively connected to the first optical fiber, the third optical fiber adapter is connected to the second optical fiber, and the fourth optical fiber adapter is connected to the third optical fiber;
the optical fiber-fixing component comprises an optical fiber bracket, a first gasket and a second gasket, and the first optical fiber adapter, the second optical fiber adapter, the third optical fiber adapter and the fourth optical fiber adapter are assembled and connected to the optical fiber bracket in layers;
the first gasket is sleeved on the second optical fiber adapter and the third optical fiber adapter, and the second gasket is sleeved on the first optical fiber adapter and the fourth optical fiber adapter; the upper shell part and the lower shell part squeeze the optical fiber bracket, the first gasket and the second gasket to fix the third optical fiber adapter and the fourth optical fiber adapter.

9. The optical module according to claim 3, further comprising a lower shell part and an optical fiber-fixing component, wherein a connection seat is formed at one end of the lower shell part, and the connection seat is provided thereon with a plurality of insertion holes; the optical transmission assembly further comprises a first optical fiber adapter, a second optical fiber adapter, a third optical fiber adapter and a fourth optical fiber adapter, and front ends of the first optical fiber adapter, the second optical fiber adapter, the third optical fiber adapter and the fourth optical fiber adapter are respectively inserted into the insertion holes;
the optical fiber-fixing component comprises an optical fiber-fixing frame and a gasket, wherein the optical fiber-fixing frame is located at a side of the connection seat, and the optical fiber-fixing frame supports and connects the first optical fiber adapter, the second optical fiber adapter, the third optical fiber adapter and the fourth optical fiber adapter;
the optical fiber-fixing frame cooperates and connects with the connection seat and the gasket to fix and connect the third optical fiber adapter and the fourth optical fiber adapter.

10. The optical module according to claim 9, wherein the optical fiber-fixing frame comprises:
a fixing plate fixedly connected to the lower shell part, wherein the fixing plate is formed thereon with a first assembly hole, and an edge of the fixing plate is formed with a slit communicated to the first assembly hole; the optical fiber passes through the slit such that the optical fiber adapter is assembled and connected in the first assembly hole, so as to fix and support the optical fiber adapter through the first assembly hole;
a connecting plate located at a bottom of the fixing plate and configured to assemble and connect with the lower shell part;
a first fixing arm connected to one side of the fixing plate and configured to assemble and connect with a lower side plate of the lower shell part; and
a second fixing arm connected to the other side of the fixing plate and configured to assemble and connect with a lower side plate of the lower shell part.

11. The optical module according to claim 2, wherein a second connection layer is arranged on the back surface of the circuit board and is located at an edge of the mounting hole, wherein the second connection layer is formed thereon with a first groove which breaks the second connection layer; and the first mounting surface is fixedly connected to the second connection layer.

12. The optical module according to claim 5, wherein a third connection layer is disposed on the circuit board below the first optical reception component, wherein the third connection layer comprises a welding portion, the welding portion being located at a side of the third connection layer away from the mounting hole; and the first optical reception component comprises a detector group disposed on the welding portion;
a blocking groove is formed on the third connection layer, and the blocking groove is located at an edge of the welding portion; the blocking groove extends from the edge of the welding portion in a direction away from the third connection layer and away from the welding portion.

13. The optical module according to claim 1, further comprising an upper shell part, on which a heat dissipation component is arranged, wherein the heat dissipation component comprises a heat dissipation fin and a heat dissipation cover plate, the heat dissipation fin extends along a length direction of the upper shell part, a top of the heat dissipation fin is connected to the heat dissipation cover plate, and the heat dissipation fin and the heat dissipation cover plate form a heat dissipation channel.

14. The optical module according to claim 8, wherein the optical fiber bracket comprises:
a bracket plate which is laterally arranged in an optical port of the optical module;
a first support group arranged on an upper side of an end of the bracket plate, wherein the first support group comprises support plates arranged side by side in sequence, with a gap between adjacent support plates; and the first support group is configured to assemble and connect the second optical fiber adapter and the third optical fiber adapter; and
a second support group arranged on a lower side of the end of the bracket plate, wherein the second support group comprises support plates arranged side by side in sequence, with a gap between adjacent support plates; and the second support group is configured to assemble and connect the first optical fiber adapter and the fourth optical fiber adapter;
the first gasket is assembled and connected to the first support group, and the second gasket is assembled and connected to the second support group.

15. The optical module according to claim 14, wherein the optical fiber bracket further comprises:
a first assembly column arranged on an upper side of the bracket plate and extended from one end of the bracket plate to a side of the first support group;
a second assembly column arranged on a lower side of the bracket plate and extended from one end of the bracket plate to a side of the second support group; and
a third assembly column located at a side of the second support group, and a top of the third assembly column is extended to the upper side of the bracket plate.
